# EUROPÄISCHE PATENTSCHRIFT

(11) **EP 0 991 599 B1**
(45) Veröffentlichungstag und Bekanntmachung des Hinweises auf die Patenterteilung: **08.08.2001**
(21) Anmeldenummer: 98930704.6
(22) Anmeldetag: 19.05.1998
(51) Int. Cl.: C03B 9/33, C03B 9/42, C03B 9/29, C03B 11/08, C03B 19/06, C03B 29/00

(54) **VERFAHREN ZUR HERSTELLUNG VON KELCHGLÄSERN, BECHERN UND GLEICHARTIGEN HOHLGLÄSERN UND ZUGEHÖRIGE VORRICHTUNG ZUR DURCHFÜHRUNG DES VERFAHRENS**
METHOD FOR PRODUCING GLASS GOBLETS, TUMBLERS AND SIMILAR HOLLOW GLASSES, AND CORRESPONDING DEVICE FOR CARRYING OUT SAID METHOD
PROCEDE POUR LA FABRICATION DE VERRES CUPULIFORMES, DE BECHERS ET DE VERRES CREUX SIMILAIRES, ET DISPOSITIF ASSOCIE POUR LA MISE EN OEUVRE DE CE PROCEDE

(30) Priorität: 31.05.1997 DE 19722921
(43) Veröffentlichungstag der Anmeldung: 12.04.2000
(73) Patentinhaber: Schott Zwiesel Aktiengesellschaft, 94227 Zwiesel (DE)
(72) Erfinder: HARTEL, Robert, D-52080 Aachen (DE); MOLZ, Josef, D-94227 Zwiesel (DE); HORINA, Michael, D-94227 Zwiesel (DE); KREISS, Edwin, D-55450 Langenlonsheim (DE); GRUBER, Alois, D-94258 Frauenau (DE); HELLER, Kurt, D-94258 Fauenau (DE)
(74) Vertreter: Fuchs Mehler Weiss & Fritzsche
(86) Internationale Anmeldenummer: EP9802931
(87) Internationale Veröffentlichungsnummer: WO9854102

(56) Entgegenhaltungen:
- EP-A- 0 506 131
- EP-A- 0 535 388
- EP-A- 0 546 617
- EP-A- 0 599 037
- DE-A- 3 239 517
- DE-A- 19 521 117
- FR-A- 2 450 786
- US-A- 3 271 126
- US-A- 3 293 017
- US-A- 3 453 096
- US-A- 3 705 026
- US-A- 5 346 522
- US-A- 5 378 255

## Beschreibung

Die Erfindung betrifft ein Verfahren zur Herstellung von Kelchgläsern, Bechern und gleichartigen Hohlgläsern durch Blasformen eines geschmolzenen massiven Glaspostens.

Die Erfindung betrifft ferner eine Vorrichtung zur Herstellung von Kelchgläsern, Bechern und gleichartigen Hohlgläsern mit einer Blasformstufe, bestehend aus einem Blaskopf mit einem Blas-Arbeitsring, einer Blaseinheit, einer Form und einem Bodenteller, in der ein geschmolzener Glasposten zu dem gewünschten Hohlglas formbar ist, und mit einer Entnahmestufe enthaltend Einrichtungen zur Entnahme des Hohlglases aus der Blasformstufe, sowie zur Übergabe an den Folgeprozeß.

Bei den bekannten Verfahren zur Herstellung von vorgenannten Hohlglas-Formkörpern wird das Ausgangsglas in einem Wannenbetrieb-Glasschmelzprozeß aufbereitet.

So zeigt die DE-A1-32 39 517 ein Verfahren zur Herstellung von kelchartigen Glasgegenständen, bei welchem ein aus dem Speiser eines Glasschmelzofens abgegebener Glasposten auf einen Preßstempel aufgelegt und zwischen diesem und einer Vorform zu einer Glaspastille verpreßt wird. Die noch plastifizierte Pastille wird danach von der Vorform abgelöst und auf einen ringförmigen Körper aufgelegt, auf dem sie durch Schwerkrafteinfluß mindestens in ihrem mittleren Teil kelchförmig absinkt. Anchließend erhält diese Pastille in einer Form die endgültige Formgebung.

Voraussetzung für derartige Verfahren ist eine Schmelzwanne zur Entnahme der Glaspost en für die zu formenden Hohlgläser.

Dieser Wannenbetrieb und der nachgeschaltete Hohlglas-Produktionsprozeß sind unmittelbar miteinander verbunden, so daß Wechselwirkungen der folgenden Art auftreten:
- Ungleichmäßiger Wannenbetrieb bzw. Wannenauslastung je nach Gewicht der Produkte.
- Bei Produktionswechsel (Umrüsten) der Produktionsmaschinen ist eine Anpassung der Wannenleistung notwendig, wodurch zusätzliche Ungleichmäßigkeiten im Schmelzprozeß auftreten.
- Da eine Wanne mehrere Produktionslinien speist, kann nur Klarglas in der Wanne erschmolzen werden, welches erst unmittelbar vor dem Einspeisen in die jeweilige Produktionsmaschine in einem aufwendigen, komplexen Prozeß eingefärbt werden kann.
- Die Produktwechselzeit ist mit abhängig von der Größe der Gewichtsdifferenz der aufeinanderfolgenden Produkte, da dadurch die Dauer des Überführens der Speiseeinrichtungen in den neuen stabilen Betriebszustand erheblich beeinflußt wird.

Bei kleiner werdenden Losgrößen steigt die Zahl der Produktionswechsel. Entsprechend sinkt die Wirtschaftlichkeit der Produktion. Zusätzlich erfordern die heutigen Produktionsmaschinen, da sie ursprünglich auf die Produktion von großen Losgrößen ausgelegt sind, einen hohen Aufwand an Formen und Werkzeugen für das jeweilige Produkt, verbunden mit einem entsprechenden Personal- und Betriebsmitteleinsatz.

Die bisherige Art der maschinellen Kelchglasproduktion verursacht darüber hinaus u.a. einen hohen Anteil an Restglas, der bis zu mehr als 50 Gew.-% betragen kann. Dieses Restglas (Scherben) erfordert aufwendige Transport- und Zuführungseinrichtungen zwecks Rückeinschmelzen in der Wanne und bedingt dort einen zusätzlichen Wärmeenergieaufwand.

Die einzelnen Produktionsmaschinen einer Produktionslinie sind bei den bekannten Verfahren und Vorrichtungen miteinander verkettet und erfordern eine dementsprechende Abstimmung. Mit steigender Anzahl von Verkettungseinrichtungen steigt auch die Bruchrate, da jedes Handling von Glas Bruchgefahr in sich birgt.

Der Erfindung liegt die Aufgabe zugrunde, das eingangs bezeichnete Verfahren so zu führen bzw. die eingangs bezeichnete Vorrichtung so aufzubauen, daß eine wirtschaftlichere Herstellung von vorgenannten Hohlgläsern möglich ist. Die Herstellung dieser Hohlgläser soll dabei von dem Wannenbetrieb-Glasschmelzprozeß unabhängig betrieben werden können.

Die Lösung dieser Aufgabe gelingt gemäß der Erfindung für das Verfahren mit den Schritten:
- Herstellen von massiven Glasrohlingen in Form von konfektionierten Halbzeugen in einer eigenen separaten Fertigungslinie,
- Lagern und Bevorraten der Halbzeuge,
- Zufuhr der Halbzeuge aus der Bevorratung an die Fertigungslinie für das Ausformen der Hohlgläser unter Vorwärmen der Halbzeuge,
- Bereitstellen der vorgewärmten Halbzeuge für eine weitere Erwärmung,
- Erhitzen des Halbzeuges auf Blastemperatur zu einem plastisch verformbaren massiven Glasposten durch eine weitere Erwärmung,
- Formblasen des plastifizierten Glaspostens zu dem Hohlglas in einer Blasform mit Unterstützung des geblasenen Hohlglas-Formkörpers durch einen Bodenheber,
- Entnahme des Hohlglases aus der Blasform und Übergabe an den Folgeprozeß.

Hinsichtlich der Vorrichtung gelingt die Lösung der Aufgabe durch
- eine Stufe mit Lagerungs- und Transporteinrichtungen zum Bevorraten und Zuführen von zwischengelagerten massiven Glas-Halbzeugen für das zu formende Hohlglas, die zuvor in einer eigenen separaten Vorrichtung hergestellt sind,
- eine nachgeschaltete Vorwärmstufe mit Wärmeeinrichtungen zum Vorwärmen der massiven Halbzeuge,
- eine Stufe mit Transporteinrichtungen zum Bereitstellen der massiven Halbzeuge an einer Halbzeug-Erwärmstufe mit Wärmeeinrichtungen zum weiteren Erwärmen der Halbzeuge zumindest auf eine Temperatur nahe der Blastemperatur, und
- durch eine Übergabestufe mit Einrichtungen zum Ablegen der in der Halbzeug-Erwärmstufe weiter erwärmten massiven Halbzeuge in die Blasformstufe, wo sie als plastisch verformbare massive Glasposten für die Blasformung der Hohlgläser zur Verfügung stehen.

Dadurch, daß der Glasrohstoff in Form von auf das zu fertigende Produkt abgestimmten Halbzeugen, die auf Vorrat in einem separaten Prozeß hergestellt werden, und die erst unmittelbar vor dem Blasprozeß in einem separaten Durchlaufofen auf die notwendige Blastemperatur erhitzt werden, ist ein gleichmäßiger Wannenbetrieb möglich mit gleichbleibenderer Schmelzqualität.

Auch ist eine einfache Umstellung der Hohlglasfertigung von Klarglas auf Farbglas möglich.

Die Erfindung bedingt mit Vorteil auch eine zeitliche, örtliche und organisatorische Unabhängigkeit des Wannenbetriebes von der Fertigungslinie des Hohlglas-Formkörpers. Der Hohlglasfertigungsprozeß kann in einem überschaubaren, wenig kostenintensiven Umfeld durchgeführt werden, wodurch eine hohe Flexibilität in der Standortwahl erreicht wird. Der technologie- und investitionsintensive Wannenbetrieb kann unabhängig vom Hohlglasfertigungsprozeß auch ortsfern betrieben werden.

Durch die Erfindung kann die Wanne dreischichtig ohne Umrüstpausen zur Herstellung der Halbzeuge verwendet werden. Es ist dabei eine flexiblere Fertigung kleiner Losgrößen möglich. Es ergibt sich auch die Möglichkeit der Erprobung neuer Techniken/Technologien an einzelnen Funktionsmodulen der erfindungsgemäßen Vorrichtung, ohne den gesamten Produktionsprozeß zu stören. Auch eröffnet die Erfindung Möglichkeiten zur Einsparung von Personal, Material, Energie und Formenkosten.

Für das Ausbilden und Herstellen von Glasrohlingen in Form von konfektionierten Halbzeugen für das Formblasen in einer eigenen separaten Fertigungslinie sind mehrere Möglichkeiten denkbar, von denen einige nachstehend dargestellt werden.

Gemäß einer Weiterbildung der Erfindung besteht eine erste Möglichkeit in einer indirekten Halbzeug-Herstellung durch Ausstechen (Stanzen) oder Schneiden von runden flachen Glasscheiben aus einem Flachglas als Halbzeug für das Formblasen.

Die Vorteile dieser Möglichkeit sind:
- Einfacher Fertigungsprozeß, einfacher Transport und einfache Bevorratung von Halbzeugen.
- Gute, einfache Handhabung der flachen Halbzeuge.
- Aufsplittung der Halbzeugherstellung örtlich getrennt in den Flachglas-Rohling und die eigentlichen Halbzeugherstellung.

Zu berücksichtigen sind dabei allerdings
- die technologisch aufwendige Halbzeugherstellung,
- der Glasverschnitt nach dem Ausschneiden oder Ausstanzen, der wieder rückgeschmolzen werden muß,
- die Zerstörungs- und Beschädigungsgefahr des Halbzeuges beim Transport.

Eine weitere Möglichkeit besteht gemäß einer Ausgestaltung der Erfindung in einer direkten Halbzeugherstellung durch Gießen einer flachen Tablette in einer Form im Anschluß an das Aufschmelzen eines Glasrohstoffes als Halbzeug für das Formblasen.

Die Vorteile dieser zweiten Möglichkeit sind:
- Einfacher Fertigungsprozeß (üblicher Wannenbetriebs-Glasschmelzprozeß), einfacher Transport und einfache Bevorratung von gegossenen Halbzeugen.
- Gute, einfache Handhabung und Bevorratung flacher Halbzeuge.

Zu berücksichtigen ist dabei allerdings die Zerstörungs- und Beschädigungsgefahr des Halbzeuges beim Transport.

Eine dritte Möglichkeit besteht gemäß einer weiteren Ausgestaltung der Erfindung im Gießen einer in bezug auf den herzustellenden Hohlglas-Formkörper formoptimierten profilierten Tablette.

Die Vorteile sind:
- Einfacher Fertigungsprozeß der formoptimierten, profilierten Tablette (üblicher Wannenbetrieb).
- Blasoptimierter Prozeß ist möglich.

Zu berücksichtigen sind die:
- Zerstörungs- und Beschädigungsgefahr des Halbzeuges beim Transport.
- Schwierige Handhabung und Lagerung des profilierten Halbzeuges.

Eine vierte Möglichkeit besteht gemäß einer Weiterbildung der Erfindung in der Herstellung eines formoptimierten Halbzeuges in einem Halbzeugträger. Diese Möglichkeit ist gekennzeichnet durch eine direkte Herstellung eines in bezug auf den herzustellenden Hohlglas-Formkörper formoptimierten Halbzeuges durch Ausgießen eines Halbzeugträgers mit einer optimierten Innenform mit Glasrohstoff aus einer Schmelze, wobei das Halbzeug in den folgenden Schritten bis zum Abtrennen des geblasenen Hohlglas-Formkörpers in dem Halbzeugträger verbleibt und mit diesem eine Verarbeitungseinheit bildet.

Der Halbzeugträger ist dabei bevorzugt ein entsprechend gestalteter Ring, wobei in der Blaseinheit der Blasformstufe eine Aufnahme für den Halbzeugträger als Arbeitsring beim Formblasen vorgesehen ist.

Die Vorteile dieser Möglichkeit sind:
- Schutz des Halbzeuges vor Zerstörung und Beschädigung durch den umgebenden Halbzeugträger.
- Es ist ein blasoptimierter Prozeß möglich. Bei optimierter Innenkontur des ringförmigen Halbzeugträgers kann das verlorene Restglas um bis zu 50 % gemindert werden.
- Einfacher Fertigungsprozeß, einfache Transportautomatisierung und Stapelbarkeit des Halbzeuges.
- Einfache Handhabung bei Handlingsvorgängen durch standardisierte geometrische Gestalt des Halbzeugträgers.
- Nutzung des Ringes als Arbeitsring während des Blasprozesses.
- Ersatz für Überglas, dadurch weniger Glasvolumen im Umlauf.

Zu berücksichtigen sind dabei allerdings:
- Die Bereitstellung des Halbzeugträgers.
- Die Notwendigkeit des Trennvorganges von Halbzeug und Halbzeugträger.
- Der Aufbereitungs- und Entsorgungsaufwand des Halbzeugträgers.

Bei der Herstellung von Hohlglas-Formkörpern in Form von Kelchen mit einem Stiel ergeben sich verschiedene Möglichkeiten für das Zusammenführen und Verbinden von Stiel und Kelch. Gemäß einer ersten Weiterbildung der Erfindung ist das Verfahren gekennzeichnet durch das Zusammenführen und Verbinden von extern als Halbzeug gefertigten Stielen mit dem formgeblasenen Kelch in der Blasform.

Bei einem derartigen Verfahren ist die Fertigung der Stiele unabhängig von der Hohlglasproduktion.

Gemäß einer alternativen Ausgestaltung der Erfindung ist das Verfahren gekennzeichnet durch das Zusammenführen und Verbinden von innerhalb der Fertigungslinie gefertigten Stielen mit den formgeblasenen Kelchen in der Blasstation.

Bei einer derartigen Ausführungsform entfällt die Bevorratung von Stiel-Halbzeugen und ein wesentlicher Aufwand für die Zufuhr dieser Halbzeuge in den Produktionsprozeß.

Das weitere Erhitzen des Halbzeuges auf Blastemperatur kann ebenfalls auf verschiedene Weise erfolgen. Gemäß einer ersten Ausgestaltung der Erfindung erfolgt dieses weitere Erhitzen in zwei Stufen, nämlich durch eine erste weitere Erwärmung kurz vor der Blasstation mit anschließender Übergabe des noch nicht plastischen Halbzeuges an diese Station und durch eine zweite weitere Erwärmung des Halbzeuges auf Blastemperatur in dieser Station.

Diese Ausführungsform erleichtert das Handling des Halbzeuges in die Blasstation.

Es ist gemäß einer alternativen Ausführungsform auch denkbar, daß das Erhitzen des Halbzeuges auf Blastemperatur in einem einzigen Schritt in einer gesonderten Vorrichtung erfolgt mit Übergabe des plastifizierten Halbzeuges an die Blasstation.

Da das Handling von plastifiziertem Glas nicht ohne Probleme ist, ist bei dieser Alternative die Übergabe des Halbzeuges an die Blasstation nicht unproblematisch.

Wenn die gewünschte Fertigungstiefe ein Abtrennen des Überglases vom restlichen Hohlglas-Formkörper vorsieht, wird dies vorzugsweise in der Blasstation nach Öffnung der Form mittels eines Laserstrahles durchgeführt.

Bei einer derartigen Verfahrensführung entfällt eine weitere Randbearbeitung des Hohlglas-Formkörpers.

Gemäß einer weiteren Ausgestaltung der Erfindung ist zwischen der Bevorratungsstufe und der Vorwärmstufe einer Halbzeug-Kontrollstufe mit Einrichtungen zur Zustandskontrolle der Halbzeuge eingeschaltet.

Dadurch wird gewährleistet, daß nur die für die Produktion geeigneten Halbzeuge der weiteren Fertigung zugeführt werden.

Gemäß einer weiteren Ausgestaltung der Erfindung sind die Wärmeeinrichtungen in der Vorwärmstufe durch einen Durchlauf-Wärmeofen mit Strahlungsbrennern oder dergleichen gebildet.

Dadurch können in der Vorwärmstufe die üblichen Wärmeeinrichtungen verwendet werden.

Gemäß einer Weiterbildung der Erfindung werden die Transporteinrichtungen in der Stufe zum Bereitstellen der Halbzeuge durch Schieber in Verbindung mit einer Rutsche oder durch einen Greifarm gebildet.

Dadurch ist die Bereitstellung der Halbzeuge mit einfachen Mitteln möglich.

Gemäß einer anderen Ausgestaltung der Erfindung sind die Wärmeeinrichtungen in der Halbzeug-Erwärmstufe alternativ durch einen Wärmestrahler, einen Gas- oder Gas/Sauerstoffstrahler oder Mikrowellenstrahler gebildet, die in einer weitgehend geschlossenen Kammer, vorzugsweise unterhalb der Halbzeuge, angeordnet sind.

Dadurch ist eine Erwärmung des Kernbereiches des Glasrohlings unter Minimierung von Wärmeverlusten mit einfachen Mitteln möglich.

Gemäß einer Ausgestaltung der Erfindung sind die Wärmeeinrichtungen in der Halbzeug-Erwärmstufe so ausgelegt, daß die Halbzeuge auf eine Temperatur in der Nähe der Blastemperatur, vorzugsweise auf 900°C, erwärmt werden, mit Aufheizung auf die Blastemperatur in den Blaskopf der nachgeschalteten Blasformstufe durch Einsatz eines Lasers mit Strahlzufuhr durch eine Bohrung im Blaskopf für die Zufuhr der Druckluft.

Diese zweistufige Aufheizung auf Blastemperatur hat den Vorteil, daß die Halbzeuge erst unmittelbar in der Blasformstufe plastifiziert werden und bis dorthin auch einfacher zu händeln sind.

Alternativ zu dieser Ausführungsform können die Wärmeeinrichtungen auch so ausgelegt sein, daß die weitere Erwärmung auf Blastemperatur in einem einzigen Schritt in einer gesonderten Vorrichtung parallel zum Blasprozeß erfolgt.

Diese Variante hat den Vorteil, daß sie den Haupttakt nicht verlängert.

Gemäß einer Ausgestaltung der Erfindung sind die Einrichtungen in der Übergabestufe durch einen Schwenkarm mit Greifer gebildet.

Diese Einrichtungen erlauben eine einfache Möglichkeit für die Übergabe des erhitzten Halbzeuges an die Blasformstufe.

Bei den bekannten Verfahren und Vorrichtungen werden die einzelnen Prozeßschritte auf mehreren hintereinander angeordneten, räumlich voneinander getrennten Maschinen durchgeführt. Diese Konzeption ist mit Nachteil sehr personalintensiv, bedingt beim Transport von einer Maschine zu der anderen einen relativ hohen Glasbruch, erfordert verhältnismäßig hohe Rüstzeiten von etwa 1,5 Stunden, weil die Blasmaschine und zuarbeitende Maschinen abhängig voneinander auf ein anderes Produkt eingerichtet werden müssen und erst dann wieder mit der Produktion begonnen werden kann, wenn der längerdauernde Umrüstvorgang beendet ist, einen relativ hohen Energieverbrauch zum Glasschmelzen, da verhältnismäßig viel Bruchglas und Überglas in die Schmelzwanne zurückgeführt werden muß, das erneut aufgeschmolzen werden muß und bedingt nicht zuletzt hohe Formenkosten, da eine große Anzahl von Formensätzen unabhängig von der Losgröße des zu fertigenden Hohlglasartikels bereitgehalten werden müssen.

Diese Nachteile lassen sich gemäß einer Weiterbildung der Erfindung vermeiden, wenn die Stufen der Halbzeugbereitstellung, der Halbzeugerwärmung, der Blasformung und der Entnahme als eigenständige Funktionsmodule ausgebildet sind und das Grundgerüst einer modular aufgebauten Fertigungseinheit bilden, dem weitere Module, wie Stielzuführung, Stielpressen, Abtrennen von Überglas, optional hinzufügbar sind.

Eine besonders kompakte Produktionseinrichtung läßt sich herstellen, wenn dabei mehrere Fertigungseinheiten modular zu einer Sektion kombiniert sind und mehrere Sektionen zu einer Produktionseinrichtung zusammengeschaltet sind. Dabei können alternativ jede Fertigungseinheit mit einzelnen Funktionsmodulen bestückt sein oder mehrere Fertigungseinheiten gemeinsame Funktionsmodule aufweisen. Ein klarer Materialfluß ergibt sich dabei, wenn hinter den Fertigungseinheiten die Stufen der Halbzeug-Bevorratung, der Halbzeug-Kontrolle und der Halbzeug-Vorwärmung angeordnet sind sowie quer vor den Fertigungseinheiten und längs zur Produktionseinrichtung eine Abtransporteinrichtung für den gemeinsamen Abtransport der hergestellten Hohlglas-Formkörper sowie eine automatische Formenwechseleinrichtung vorgesehen ist. Im bekannten Fall erfolgte dabei der Formenwechsel manuell.

Die vorstehend gekennzeichnete, modular aufgebaute Produktionseinrichtung besitzt eine Reihe von Vorteilen.

Bedingt durch die erhöhte Automatisierung beim Formwechsel und durch die Zusammenfassung von aufeinanderfolgenden Prozeßschritten auf nur einer Fertigungseinrichtung sind erhebliche Personaleinsparungen möglich.

Der Glasbruch wird deutlich vermindert, da Transportwege zwischen den Prozeßschritten entfallen, an denen jetzt Ausfälle durch Bruch stattfinden.

Der modulare Aufbau der Fertigungseinrichtung, bei der jede Fertigungseinheit autark arbeitet, hat bei der Umrüstung auf ein anderes Produkt folgende Vorteile: An den zuerst umgerüsteten Fertigungseinheiten kann bereits produziert werden, während weitere Stationen umgebaut werden (sektionsweiser Produktionsablauf). Der prozeßbedingte Formenwechsel wird automatisch durchgeführt. Durch diese verkürzte Rüstzeiten bei der erfindungsgemäßen Anlage sind die Produktionsverluste durch Umrüstarbeiten merklich geringer als bei den Verfahren nach dem Stand der Technik.

Durch die bessere Ausnutzung des Rohglases kann der Energieverbrauch zum Glasschmelzen gemindert werden. da weniger Bruch- und Überglas in die Schmelzwannen zurückgeführt wird.

Bei der erfindungsgemäßen Produktionseinrichtung kann die Formenanzahl auf die Losgröße des zu fertigenden Hohlglas-Artikels abgestimmt werden, da auf den modularen Fertigungseinheiten auch verschiedene Formen gleichzeitig eingesetzt werden können. Bei Formensätzen geringerer Stückzahl brauchen außerdem weniger Formen als Ersatz bereitgestellt werden. So kann beispielsweise bei der Fertigung von Kelchen mit Stielen durch eine vom Blasprozeß unabhängige Stielfertigung die Formenanzahl auf die Losgröße abgestimmt werden, unabhängig vom Kelch, der später hinzugefügt wird. So können Stiele in hohen Stückzahlen gefertigt werden, die später mit verschiedenen Kelchen ein Stielglas bilden, da in einer Glasserie unterschiedliche Kelchformen gleiche Stielgeometrien haben können. Dadurch wird die Formenausnutzung optimiert, die umso besser wird, je größer die Losgröße ist. Außerdem können die Wartungsintervalle deutlich verlängert werden.

Durch dieses Konzept können daher im Bereich der Preß- und Blasformen beträchtliche Einsparungen erzielt werden.

Weitere Ausgestaltungen und Vorteile der Erfindung ergeben sich anhand der Beschreibung von in den Zeichnungen dargestellten Ausführungsbeispielen.

Es zeigen:
- Fig. 1: eine schematische Darstellung des erfindungsgemäßen Produktionsablaufes bei der Herstellung eines Bechers als Hohlglas-Formkörper,
- Fig. 1A: einen vergrößerten Ausschnitt aus Fig. 1 betreffend die Blasstation,
- Fig. 1B: ein Lagern und Bevorraten der Halbzeuge einschließlich deren Zufuhr gemäß einer ersten Ausführung mittels eines Förderbandes,
- Fig. 1C: eine zur Fig. 1B alternative Ausführung der Halbzeug-Bevorratung mit einem Schieber,
- Fig. 1D: die Vorwärmung der Halbzeuge in einem Vorwärm-Durchlaufofen,
- Fig. 1E: die Bereitstellung der vorgewärmten Halbzeuge für eine weitere Erwärmung mit einer Schieberanordnung über eine Rutsche,
- Fig. 1F: alternativ die Halbzeug-Bereitstellung mit einem Greifsystem,
- Fig. 1G: das Erwärmen des Halbzeuges auf Blastemperatur mit einer unterhalb des Halbzeuges angeordneten Strahlungsquelle,
- Fig. 1H: die endgültige Erwärmung des Halbzeuges auf Blastemperatur innerhalb des Blaskopfes durch einen kombinierten Blaskopf Strahlen/Blasen,
- Fig. 1J: die Erwärmung auf Blastemperatur parallel zum Blasprozeß,
- Fig. 1K: eine Ausschnittsvergrößerung aus der Blasstation mit der bevorzugten Variante, bei der der Halbzeugträger auch den Blasring bildet,
- Fig. 2: in verschiedenen Zuständen A bis G die Herstellung eines formoptimierten Halbzeuges durch Ausgießen eines Halbzeugträgers mit Glasrohstoff aus einer Schmelze, wobei das Halbzeug in den folgenden Schritten bis zum Abtrennen des geblasenen Hohlglas-Formkörpers in dem Halbzeugträger verbleibt,
- Fig. 3: ein Halbzeug in Form einer flachen Tablette, die gemäß der Variante A durch Gießen in einer Form, gemäß der Variante B durch Ausstechen (Stanzen) aus einem Flachglas oder gemäß der Variante C durch Schneiden aus einem Flachglas hergestellt wird,
- Fig. 4: eine formoptimierte profilierte Tablette als Halbzeug, die gemäß der Variante A durch Gießen in einer Form oder gemäß der Variante B durch Sintern hergestellt wird,
- Fig. 5: eine schemtaische Darstellung des erfindungsgemäßen Produktionsablaufes bei der Herstellung von Kelchen mit Stiel,
- Fig. 5A: eine Ausschnittvergrößerung der Blasstation der Fig. 5 unter Darstellung der Abtrennung des Überglases mit einem Laser,
- Fig. 5B: ebenfalls eine Ausschnittsvergrößerung betreffend die Blasstation der Fig. 5 unter Darstellung der Verbindung des Stieles mit dem Kelch,
- Fig. 5C: eine schematisierte Darstellung der Abtrennung des Überglases mittels eines Lasers,
- Fig. 5D: in einer schematisierten Darstellung die Zustände in der Blasform nach Abtrennung des Überglases,
- Fig. 6: den modularen Aufbau der erfindungsgemäßen Produktionseinrichtung gemäß einer ersten Alternative,
- Fig. 7: den modularen Aufbau der erfindungsgemäßen Produktionseinrichtung gemäß einer zweiten Alternative,
- Fig. 8: die Gesamtkonzeption der Produktionseinrichtung mit den Peripheriesystemen,
- Fig. 9: den Abtransport der Hohlglas-Formkörper bei den modularen Produktionseinrichtungen gemäß den Fign. 6 und 7,
- Fig. 10: eine schematisierte Darstellung für den automatischen Formenwechsel in den Produktionseinrichtungen nach den Fign. 6 und 7, und
- Fig. 11: eine schematische Darstellung der Erwärmung eines Halbzeuges nach Fig. 4 mittels eines Mikrowellensystems.

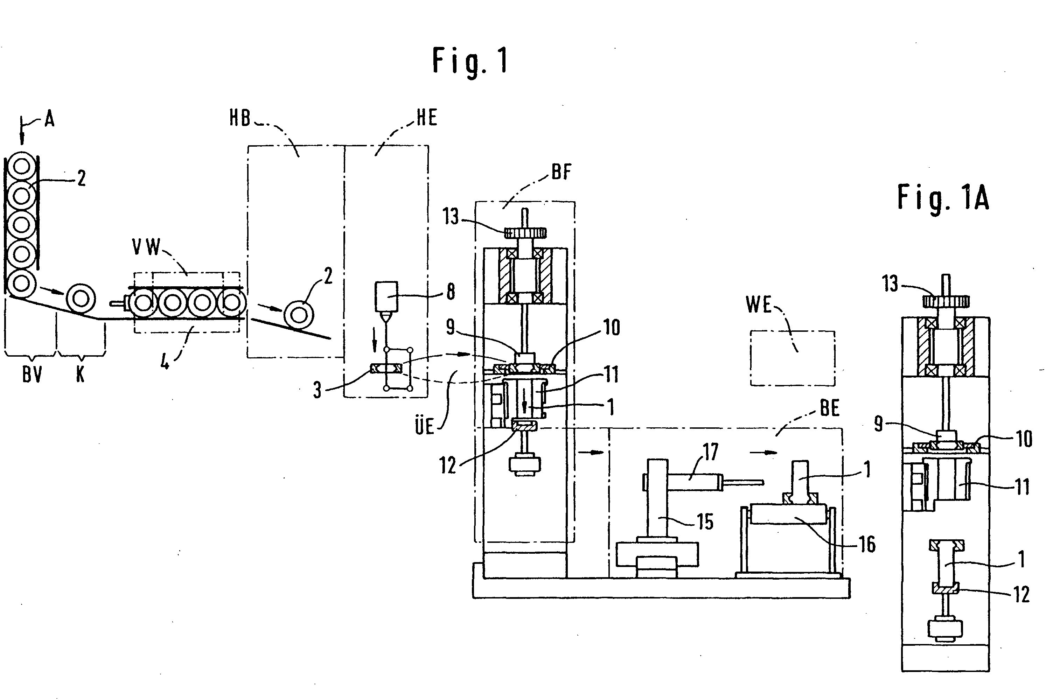

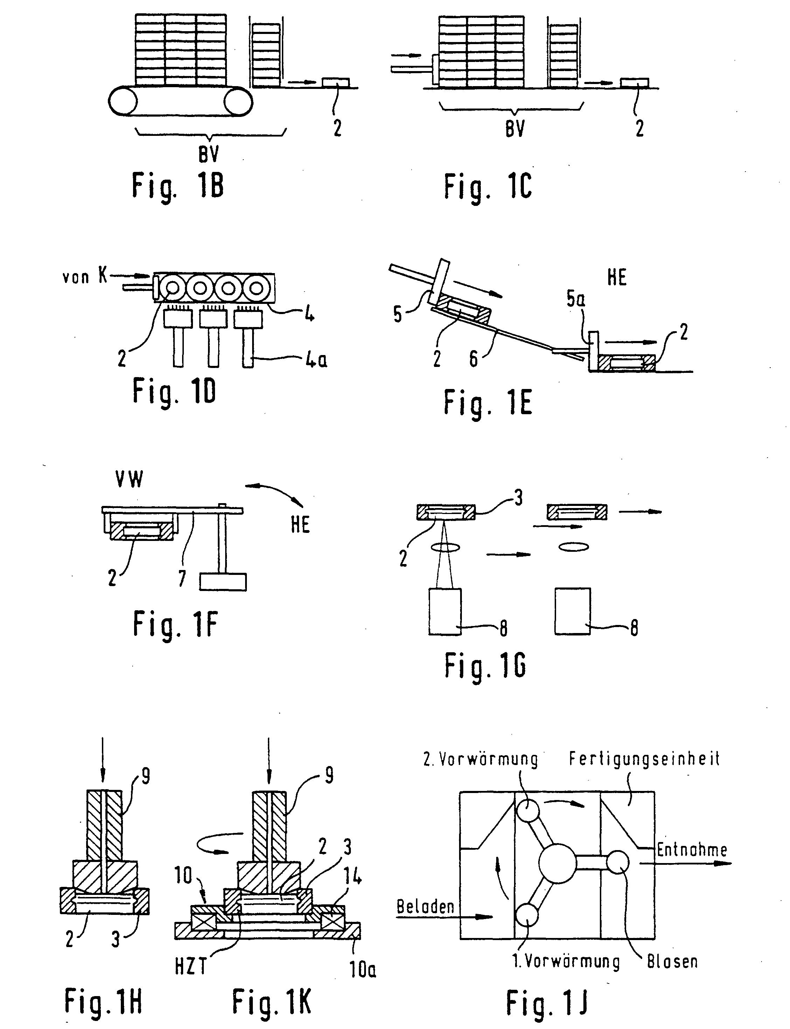

Die Fig. 1 mit der Ausschnittvergrößerung nach Fig. 1A und den Zusatzdarstellungen nach den Fign. 1B bis 1K zeigen eine vorteilhafte Ausführungsform der erfindungsgemäßen Vorrichtung, die nach dem erfindungsgemäßen Verfahren zur Herstellung von Hohlglas-Formkörpern 1, hier in Form von Bechern, arbeitet.

Das Ausgangsprodukt für die Herstellung der Becher 1 sind Glasrohlinge in Form von konfektionierten Halbzeugen 2, die an der mit dem Pfeil gekennzeichneten Stelle A einer Halbzeugbevorratung BV der Produktionseinrichtung zugeführt werden.

Vor Produktionsbeginn und während der Produktion der Becher 1 werden die in einer separaten Fertigungslinie hergestellten Halbzeuge 2 aus einem Halbzeuglager automatisch entnommen und der Halbzeugbevorratung BV zugeführt. Sie dient als Puffer zwischen Lager und Produktionseinrichtung und befindet sich in der Nähe der Produktionseinrichtung.

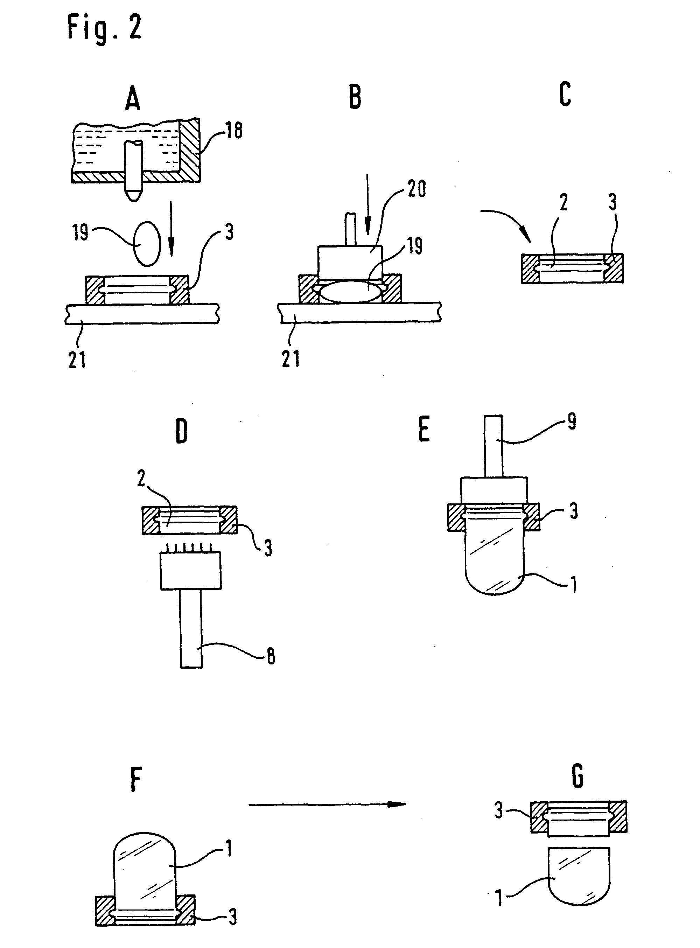

Die separate Herstellung der Halbzeuge 2, hier in Form eines formoptimierten Halbzeuges in einem ringförmigen Halbzeugträger 3, wird später noch anhand der Figuren 2 bis 4 näher erläutert.

Aus der Bevorratung BV werden die Halbzeuge einzeln der dahinter angeordneten Halbzeugkontrolle K zugeführt.

Die Halbzeuge 2 können stapelweise liegend oder stehend bevorratet werden. Der vorderste Stapel steht auf einem Platz, von dem aus die Halbzeuge einzeln an die nachfolgende Kontrolleinheit K übergeben werden. Dies kann z.B. realisiert werden durch ein Band gemäß Fig. 1B, auf dem die Stapel zur Vereinzelung transportiert werden oder durch den Transport über eine ebene Fläche gemäß Fig. 1C durch gegenseitiges Weiterschieben der Stapel.

In der Halbzeugkontrolle K werden die Halbzeuge bei Raumtemperatur einzeln auf Gewicht, Größe und Zustand (Bruch etc.) automatisch kontrolliert und sortiert. Nur die für die Produktion geeigneten Halbzeuge werden der weiteren Fertigung zugeführt. Die Kontrolleinheit K ist ein in sich geschlossenes System, bei dem die Halbzeuge 2 einzeln getaktet hinein- und heraustransportiert werden. Die Einheit kann mit verschiedener Meßtechnik, z.B. mit Wägezellen zur Gewichtskontrolle oder einer Kamera zur Zustandskontrolle ausgerüstet werden.

Die Halbzeuge 2 werden von der Bevorratung BV einzeln an die Kontrolleinheit K übergeben, z.B. über eine Rutsche, wie in Fig. 1 symbolisch angedeutet ist.

Aus der Kontrolleinheit K werden die geeigneten Halbzeuge 2 durch einen Übersetzer weiter an den nachgeschalteten Durchlauf-Vorwärmeofen 4 übergeben, die Ausschußteile werden dabei ausgeschleust.

In dem Ofen 4 werden die Halbzeuge 2 von Raumtemperatur auf eine Temperatur von etwa 500°C vorgewärmt, damit die anschließende Erwärmung direkt vor dem Blasen auf 1050°C schneller erfolgen kann. Die Fig. 1D zeigt dabei in einer Prinzipdarstellung den Halbzeugtransport im Vorwärmeofen 4. Der mit Gas oder elektrisch betriebenen Brennern 4a bestückte Heizofen 4 wird im Durchlauf betrieben, d.h. die Halbzeuge 2 werden, aus der Kontrolleinheit K kommend, in den Ofen 4 eingeführt, durch den Ofen 4 transportiert, indem sie durch das nachfolgende Halbzeug weitergeschoben werden und am Ende des Ofens entnommen.

An den Durchlauf-Vorwärmeofen 4 schließt sich die eigentliche Fertigungseinheit an. Sie ist aus mehreren Funktionsmodulen zusammengesetzt. Die in Fig. 1 strichliert eingerahmten Funktionsmodule
- Halbzeugbereitstellung HB
- Halbzeugerwärmung HE
- Becherformung BF
- Becherentnahme BE
   bilden das Grundgerüst einer Fertigungseinheit. Weitere Module können optional hinzugefügt werden, z.B. bei der noch zu erläuternden Kelchherstellung die Funktionsmodule:

- Stielpressen
- Verbindung Stiel und Kelch
- Abtrennen des Überglases.

Die Stiele können dabei auch als Halbzeug zugeführt werden.

An die Vorwärmstufe VW mit dem Ofen 4 schließt sich die Halbzeugbereitstellung HB an. In dieser Stufe HB wird das vorgewärmte Halbzeug 2 einzeln aus dem Vorwärmofen 4 entnommen und der nachfolgenden Halbzeugerwärmung HE zugeführt.

Das Halbzeug 2 kann dabei, wie in Fig. 1E dargestellt, mit einem Schieber 5 aus dem Ofen 4 entnommen und über eine Rutsche 6 bis an die Halbzeugerwärmeinheit geführt werden. In die Erwärmeinheit HE wird das Halbzeug dabei erneut mit einem Schieber 5a hineingeschoben.

Alternativ zu der Halbzeugbereitstellung über eine Rutsche nach Fig. 1E kann gemäß Fig. 1F ein Greifarm 7 eingesetzt werden, der das Halbzeug 2 aus dem Vorwärmofen 4 entnimmt und in der Halbzeugerwärmeinheit HE absetzt.

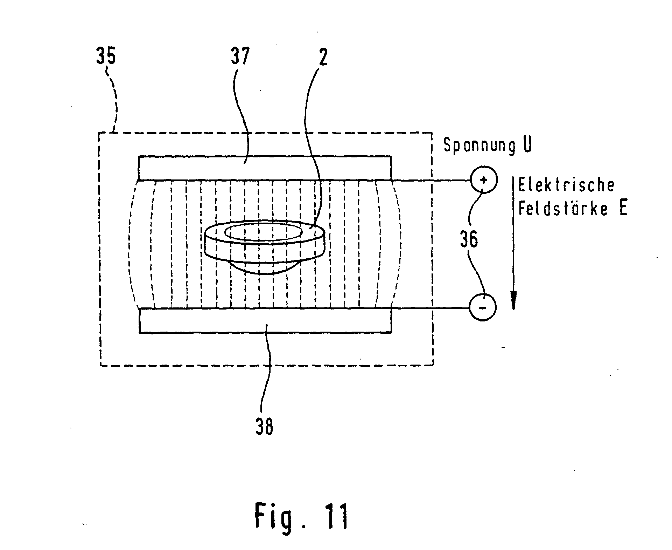

Auf die Halbzeugbereitstellung HB folgt die Stufe HE der Halbzeugerwärmung vor dem Blasen des Bechers 1 in dem sich anschließenden Funktionsmodul BF. Durch die Erwärmung des Halbzeuges vor dem Blasen soll eine gezielte Erwärmung des Kernbereiches des Glasrohlings in dem Halbzeugträger 3 erreicht werden. Die Erwärmung erfolgt mittels eines Wärmestrahlers 8, der ein CO₂-Laser oder alternativ ein Gasstrahler oder Gas/Sauerstoffstrahler oder ein Mikrowellenstrahler sein kann. Ein solches Mikrowellensystem zur Erwärmung der Halbzeuge 2 ist in Fig. 11 dargestellt. Das System besteht aus einem Mikrowellen-Wirkraum 35, der Einkopplung 36, der Eintrittsfläche 37 und der Austrittsfläche 38. Die Erwärmung erfolgt durch Umsetzung der Verlustleistung proportional zur Betriebsfrequenz und dem Quadrat der elektrischen Feldstärke. Dieses Prinzip erlaubt kurze Erwärmungszeiten und eine homogene Erwärmung.

Um Strahlungsverluste zu minimieren, erfolgt die Erwärmung mit dem Wärmestrahler 8 in einer weitgehend geschlossenen Kammer. Die Kammer öffnet sich nur beim Wechseln des Halbzeugträgers 3 mit dem Halbzeug 2, wie in Fig. 1G dargestellt. Die Fig. 1G zeigt dabei auch eine Anordnung des Wärmestrahlers 8 unterhalb des Halbzeugträgers 3 mit dem Halbzeug 2. Diese Erwärmung von unten ist eine bevorzugte Variante.

In der Stufe HE der Halbzeugerwärmung wird das vorgewärmte Halbzeug 2 von ca. 500°C aus der Vorwärmstufe VW weiter bis auf etwa 1050°C erhitzt, wodurch das Glas plastisch formbar wird. Zur weiteren Erwärmung sind zwei Varianten A, B möglich:
A) Weitere Erwärmung in zwei Schritten
   1. Schritt
      - Erwärmung von ca. 500°C auf etwa 900°C kurz vor der Becherformeinheit BF, anschließend
      - Übergabe an die Becherformeinheit
   2. Schritt
      Eine weitere Erwärmung auf etwa 1050°C erfolgt direkt in der Becherformeinheit BF mit einem speziellen Blaskopf 9 nach Fig. 1H durch eine Kombination Strahlen/Blasen (Laserstrahl/Druckluft) in Pfeilrichtung.
      Der Vorteil dieser Variante A besteht darin, daß die Halbzeuge erst unmittelbar in der Becherformeinheit BF plastifiziert werden; sie sind bis dort auch einfacher zu händeln. Auch erlaubt diese Variante A den Einsatz einer induktiven Erwärmung.
   B) Weitere Erwärmung in einem Schritt
      Die Erwärmung von 500°C bis auf etwa 1050°C erfolgt kurz vor der Becherformeinheit BF parallel zum Blasprozeß in einer speziellen Vorrichtung, die verhindert, daß das bereits plastische Glas verläuft.
      Vorteil: Das Halbzeug 2 wird, wie in Fig. 1J dargestellt, parallel zum Formprozeß erwärmt, verlängert also nicht den Haupttakt, allerdings ist eine erschwerte Übergabe des plastifizierten Glases an den Formprozeß zu beachten.

Von der Erwärmeinheit HE aus muß das Halbzeug 2 mit Träger 3 mittels einer Übergabestufe ÜF in der Becherformeinheit BF abgelegt werden, wie in Fig. 1 symbolisch durch einen Pfeil dargestellt ist. Diese Übergabe kann durch einen Schwenkarm drehend (vertikal, horizontal) oder translatorisch erfolgen. Hierfür stehen dem Fachmann verschiedene Möglichkeiten zur Verfügung. Der Halbzeugträger 3 mit dem Halbzeug 2 wird dabei auf dem Schwenkarm während dem Erwärmen und der Übergabebewegung durch einen Greifer festgehalten.

Die Becherformeinheit BF, in der die Becherformung durch Blasen stattfindet, und die in Fig. 1A ausschnittsweise nochmals etwas vergrößert dargestellt ist, ist das Herzstück der Fertigungseinheit, da auf ihr die Halbzeuge 2 zu Bechern 1 durch Blasen geformt werden. Die eigentliche Formgebung entspricht dem heute gängigen Formgebungsprozeß, der gekennzeichnet ist durch Blasen eines rotierenden Bechers in einer zweiteiligen, nichtrotierenden Form bei zeitweiliger Becherunterstützung durch einen Bodenheber. Grundsätzlich kann dabei auch eine rotierende Form bei feststehendem Külbel verwendet werden.

Die Becherformeinheit BF besteht aus:
1. Dem Blaskopf 9
   Der Blaskopf bewegt sich vertikal auf und ab aus einer oberen Stellung in eine untere Stellung. Er schaltet den Blasvorgang ein/aus und dient im Fall der Variante nach Fig. 1H der Strahlführung bei einer zweistufigen Erwärmung des Halbzeuges auf Blastemperatur.
   Seine Aufgabe ist das Fixieren des plastischen Glases beim Formen, das Aufbringen des Blasdruckes und optional der Antrieb des Arbeitsringes sowie gegebenenfalls die Führung des Laserstrahles zum Plastifizieren des Glases bei der Alternative nach Fig. 1H.
2. Der Blaseinheit 10
   Ihr Zustand ist ruhend/drehend. Ihre Aufgabe: Träger des Arbeitsringes, auf dem beim Blasen das plastische Glas aufliegt sowie Lagerung und Antrieb des Blaskopfes. Dabei kann der Arbeitsring alternativ durch den Halbzeugträger 3, wie dargestellt, mit Vorteilen gebildet sein.
3. Der Blasform 11
   Ihr Zustand ist: offen/geschlossen und ihre Aufgabe ist die Formgebung für den Becher.
4. Dem Bodenheber 12
   Sein Zustand ist: oben/mitte/unten, ruhend/drehend, halten/lösen und seine Aufgabe: Unterstützung des Bechers 1 beim Blasen (speziell bei schwerem Glas), Halten des Bechers 1 bei der Übergabe von der Formgebung zur Entnahmeeinheit BE.

Mit 13 ist dabei symbolisch der Antrieb für den Blaskopf 9 und den Bodenheber 12 bezeichnet.

Bei der Darstellung in Fig. 1A ist
- die Form 11 offen
- der Arbeitsringträger der Blaseinheit 10 ebenfalls offen, und
- der Bodenheber 12 mit dem Becher 1 in der unteren Stellung, in der die Entnahme des Bechers 1 erfolgt.

Die Blasform 11 besitzt einen vertikal geteilten, zweiteiligen Formenmantel für die Ausformung des Külbels mit zweiteiliger, eingehängter Blasform, wobei das Öffnen und Schließen der Form automatisch gesteuert ist. Durch Verschleiß einerseits sowie durch Wechsel in der Becherform ist ein Blasformenwechsel notwendig, der automatisch erfolgt. Dieser automatische Wechsel wird realisiert durch eine Wechseleinheit WE gemäß Fig. 1 für mehrere Fertigungseinheiten, wie später noch erläutert werden wird.

Zur Blasformvorbereitung werden Pasten (Sägemehl u.a.) verwendet bzw. erfolgt ein Tränken der Form mit Wasser zur Bildung von Dampfpolster zwischen Glas und Form (Trennmittel).

Der Bodenheber 12 dient der Verbesserung der Wandstärkenverteilung und der Bodenqualität des Bechers, speziell bei schwerem Glas. Er dreht sich synchron mit der Blaseinheit 10 und besitzt eine automatisch gesteuerte Auf- und Abbewegung zur gezielten Bodenutnerstützung. Zur Fertigung von verdrillten Gläsern kann dabei auch die Drehfrequenz gegenüber derjenigen der Blaseinheit bzw. des Blaskopfes einen Phasenversatz aufweisen, der einstellbar ist.

Der Bodenheber, auch Bodenteller genannt, ist ausgestattet mit einer Vorrichtung (Greifer, Saugkopf o.ä.) zur Aufnahme der Becher 1 und ist durch ein Schnellwechselsystem wechselbar.

Zur Temperaturführung während des Formprozesses werden Heizstrahler und Kühldüsen eingesetzt. Die Kühldüsen haben die Aufgabe einer Luft- und Wasserkühlung zur Beeinflussung der Mundrandstärke des Bechers 1 durch Kühlung des Külbels oder/und der Form sowie des Schutzes der Form vor Überhitzung. Die Kühldüsen sind in Position und Durchsatz optimal einstellbar. Die Betätigung erfolgt frei wählbar über Magnetventile.

Die Fig. 1K zeigt in einer vergrößerten Darstellung eine Ausführungsform des Blaskopfes 9 und der Blaseinheit 10, bei der der Halbzeugträger 3 zugleich den Arbeitsring des Blasformens bildet. Die Drehbewegung dieses Arbeitsringes, der über eine Lagerung 14 auf einer Auflage 10a der Blaseinheit 10 drehbar ruht, wird über den Blaskopf übertragen. In Pfeilrichtung wird entsprechend der Variante nach Fig. 1H neben der Druckluft ein Laserstrahl zur Plastifizierung des Halbzeuges 2 auf der Blasstation geführt.

Der Halbzeugträger 3 unterliegt dabei in der Blaseinheit folgenden Schritten:
- Zuführen Übersetzen vom Aufschmelzpunkt zur Blaseinheit
- Zentrieren Zentrierung in Blaseinheit, damit er beim Blasen rundumläuft
- Fixieren Sichern gegen Verdrehen beim Blasen
- Abdichten gegen Blaskopf damit Blasluft nicht entweicht
- Lösen vor seiner Entnahme
- Entnehmen des Halbzeugträgers inkl. anhängendem Becher, Wenden und Übergabe an Folgeprozeß.

Der Prozeßablauf der Becherformung durch Blasen ist wie folgt:
1. Ausgangsstellung
   Blaskopf oben, Blaseinheit und Bodenheber ruhend, Form geöffnet, Halbzeugträger (HZT) in Erwärmposition, Bodenheber in unterer Position.
2. Ablauf
   Übergabe des heißen HZT an Blaseinheit oder alternativ Ablegen des plastischen Halbzeuges auf dem Arbeitsring, Absenken des Blaskopfes, Beginn der Rotationsbewegung von Blaskopf mit Blaseinheit und Bodenheber (synchron), Zuschalten der Blasluft (wahlweise intermittierend oder stetig). Heben des Bodenhebers bis an das sich bildende Külbel, Zuschalten Kühlluft (wahlweise), Absenken des Bodenhebers mit dem Külbel, Schließen der Form und Ausformung des Bechers, Öffnen der Form. Heben des Bodenhebers bis zum Becher, Greifen des Bechers, evtl. Trennen des Bechers vom HZT oder Öffnen der HZT-Auflage und Übergabe des HZT nach unten, Entnahme des Bechers nach unten zur nächsten Fertigungsstufe.
   Unmittelbar nach der Übergabe des heißen HZT an die Blaseinheit wird das nächste HZT in der Stufe HE erwärmt, so daß Blasen und Erwärmen parallel ablaufen. Nach der Becherentnahme beginnt der Vorgang von neuem.

Auf den Funktionsmodul BF der Becherformung folgt, wie in Fig. 1 dargestellt, die Becherentnahme BE. In dieser Stufe wird das fertige, auf dem Bodenheber 12 stehende Hohlglas 1 von einer Entnahmeeinrichtung 15 gegriffen und auf eine Abtransportvorrichtung 16 abgelegt.

Ein auf den jeweiligen Artikel abgestimmter, modular austauschbarer und pneumatisch betriebener Greifer 17 hebt den Becher 1 vom Bodenheber 12 ab. Durch eine Kombination aus drehender und translatorischer Bewegung wird der Becher zur Abtransportvorrichtung 16 geführt. Je nachdem, in welcher Fertigungstiefe (mit/ohne Stiel; mit/ohne Überglas) das jeweilige Hohlglas bei der Entnahme vorliegt, muß das Hohlglas vor dem Absetzen auf der Abtransportvorrichtung zur Ablage auf dem Überglas oder dem Mundrand gewendet werden, anderenfalls wird es ohne Wenden abgesetzt.

Ein wesentliches Element der vorliegenden Erfindung ist das Verwenden von Halbzeugen 2 als Ausgangsprodukt, die in einer separaten Fertigungslinie unabhängig vom Blasformprozeß hergestellt werden. Eine besondere Bedeutung hat dabei die Herstellung eines formoptimierten Halbzeuges 2 in einem ringförmigen Halbzeugträger 3, welches auch Gegenstand der Darstellung in der Fig. 1 ist. Anhand der Fig. 2 mit den Zuständen A bis G sollen nun die Herstellung dieses speziellen Halbzeuges, welches die eingangs bezeichneten wesentlichen Vorteile aufweist, sowie seine vielfältigen Aufgaben erläutert werden.

Der kreisringförmige Halbzeugträger 3 hat zunächst die Aufgabe, daß er das Halbzeug 2, wie in der Stufe C dargestellt, aufnimmt. Dazu wird der Halbzeugträger 3 in der Stufe A, auf einer Unterlage 21 ruhend, mit Glas 19 durch Tropfenspeisung aus einer Glasschmelze 18 ausgegossen, wobei das Glas 19 gemäß Zustand B durch einen Preßstempel 20 in dem Träger auf die formoptimierte Konfiguration gebracht wird.

Das Glas 2 wird im späteren Glasformungsprozeß im Träger 3 mittels der Wärmequelle 8 aufgeschmolzen (Zustand D), bevor es in dem maschinellen Blasprozeß mit dem Blaskopf 9 zu einem Hohlglas 1 geformt wird, unter Ersatz des bisherigen Arbeitsringes durch den Halbzeugträger (Stufe E).

Nach dem Blasprozeß kann der Halbzeugträger 3 solange dem vereinfachten, sicheren Transport der Hohlgläser 1 dienen, bis er gezielt vom Hohlglas getrennt wird.

Die Zustände F und G zeigen dabei zwei unterschiedliche Fertigungsstufen (F = Transport mit Überglas, G = Transport ohne Überglas).

Der Halbzeugträger 3 schützt generell den Glasrohling, das Halbzeug 2, vor Transportschäden und vereinfacht die Lagerung der Halbzeuge, insbesondere durch ihre Stapelbarkeit.

Der prinzipielle Aufbau des Halbzeugträgers ist wie folgt:
- Der Halbzeugträger ist ringförmig.
- Der offene Ringkern wird mit dem Glas ausgegossen, das später durch Blasen zum Hohlglas geformt wird. Dabei muß er den Glasschmelztemperaturen von bis zu 1100°C standhalten (thermische Formstabilität).
- Das Profil der inneren Ringkontur ist optimal an den späteren Hohlglas-Formprozeß angepaßt.
- Die Ringaußenkontur ist in Form, Dicke und Durchmesser standardisiert, damit der Halbzeugträger in einheitlichen Blasstationen aufgenommen werden kann. Der Ring muß auf der Blasstation zentriert und fixiert werden, da sich die Station während dem Blasen mit bis zu 50 Umdrehungen/min dreht. Der Blaskopf liegt dabei während des Blasens auf dem Ring auf.
- Das Rohlingsgewicht und damit die spätere Hohlglasgröße wird variiert durch verschiedene Füllgrade des Ringes.
- Nach dem Abtrennen des Hohlglases vom Halbzeugträger verbleibt verfahrensbedingt ein geringer Rest im Ring. Vor einem erneuten Ausgießen des Ringes mit Glas muß dieser aufbereitet werden (Säubern, evtl. Pasten mit Trennmittel).

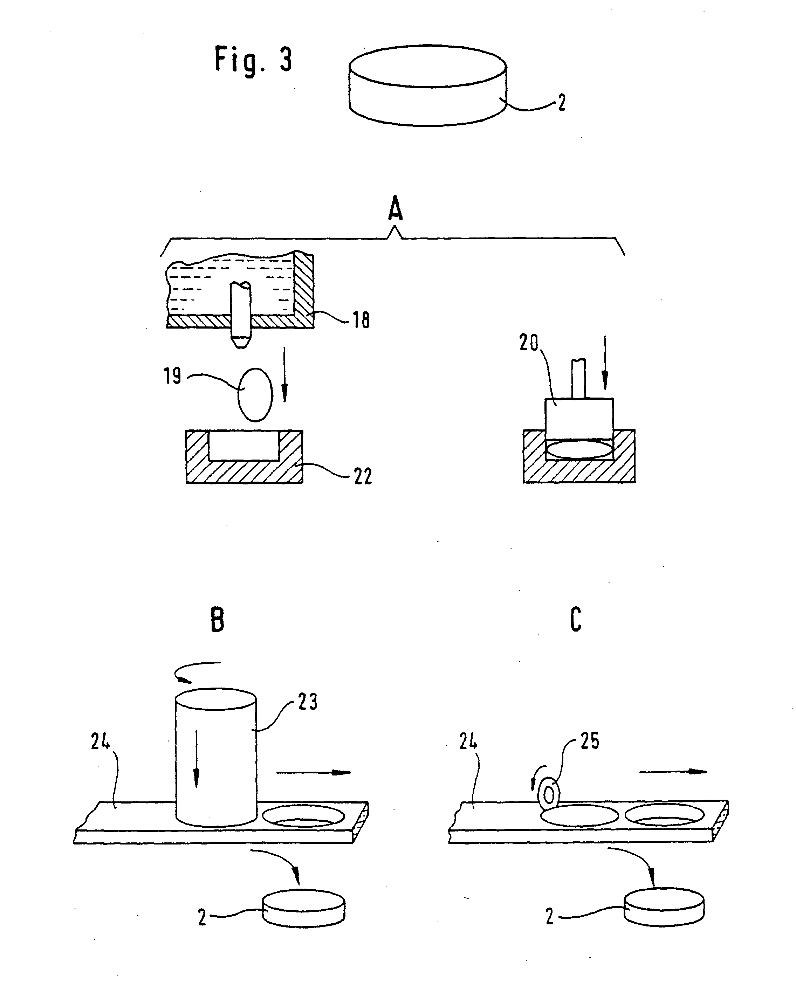

Neben dem gemäß Figur 2 mit den eingangs dargelegten Vorteilen hergestellten Halbzeug sind weitere Möglichkeiten für die Konfiguration und die Herstellung eines Halbzeuges denkbar. So kann beispielsweise das Halbzeug gemäß Figur 3 eine runde flache Glasscheibe 2 sein, die auf verschiedene, in den Teilfiguren A, B und C dargestellten Weise hergestellt werden kann. Gemäß der Teilfigur A kann die Tablette 2 entsprechend Figur 3 (A. B) in der Weise hergestellt werden, daß eine Form 22 durch Tropfeneinspeisung eines Glastropfens 19 aus einer Glasschmelze 18 ausgegossen wird, wobei der Glastropfen 19, der inzwischen die Form einer Linse angenommen hat, durch einen Preßstempel 20 in der Form 22 zu einer flachen Scheibe verpreßt wird. Gemäß der Teilfigur B kann die Tablette 2 auch durch Ausstechen aus einem Flachglas 24 mittels eines geeigneten Werkzeuges 23 hergestellt werden. Es ist gemäß der Teilfigur C auch möglich, die flache runde Glasscheibe 2 aus einem Flachglas 24 mittels eines geeigneten Schneidwerkzeuges 25 herauszuschneiden.

Im Fall der Figur 3A spricht man dabei von einer direkten Halbzeug-Herstellung, wogegen im Fall der Figuren 3B/C eine indirekte Halbzeug-Herstellung gegeben ist.

Die Vorteile sowohl der direkten als auch indirekten Halbzeug-Herstellung sind eingangs dargelegt.

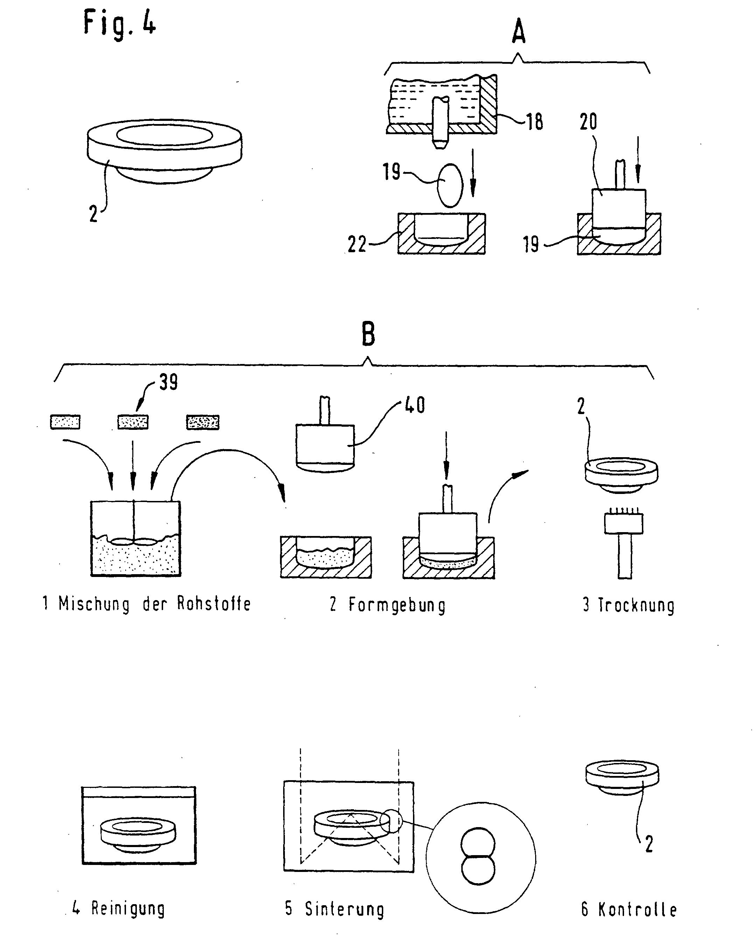

In Figur 4 ist eine weitere Möglichkeit für eine Halbzeug-Herstellung dargestellt. Gemäß der Figur 4 besteht das Halbzeug aus einer in bezug auf den herzustellenden Hohlglas-Formkörper formoptimierten profilierten Tablette 2, die analog der flachen Scheibe 2 gemäß der in Figur 4A gezeigten Alternative im Gießverfahren hergestellt wird. Dazu wird eine entsprechend gestaltete Form 22 durch Tropfenspeisung eines Tropfens 19 aus einer Glasschmelze 18 ausgegossen, wobei der Glastropfen 19 durch einen Preßstempel 20 in der Form 22 auf die formoptimierte Konfiguration gebracht wird.

Um den bei der Variante nach Fig. 4A notwendigen technologisch aufwendigen und kostenintensiven Wannenbetrieb bei der Halbzeugherstellung zu ersetzen, ist es denkbar, die Halbzeugherstellung durch Sintern von körnigem Pulver (Quarzsand, sonstige Bestandteile) durchzuführen.

Die Vorteile einer derartigen Herstellung sind:
- Einsparung von Schmelzprozessen
- Kosteneinsparung
- einfachere Technologie.

Die prinzipielle Vorgehensweise bei der Herstellung von Halbzeugen 2 durch Sintern von körnigem Pulver (Quarzsand, sonstige Bestandteile) wird anhand der Fig. 4B mit den Verfahrensschritten 1-6 näher beschrieben. Im Ausführungsbeispiel ist eine formoptimierte Tablette nach Fig. 4 als Halbzeug 2 dargestellt. Es versteht sich, daß das Halbzeug auch eine andere Form haben kann, z.B. eine Scheibe nach Fig. 3 sein kann. Auch ist ein Sintern eines Glaskörpers in einem Halbzeugträger, der gleichzeitig die Form bildet, entsprechend der Fig. 2 denkbar.

Gemäß Fig. 4 ist der Prozeß gekennzeichnet durch die Verfahrensschritte:
1. Mischung der Rohstoffe (trocken oder naß)
2. Formgebung
3. evtl. Trocknung
4. Reinigung
5. Sinterung
6. Kontrolle.

### 1. Schritt: Mischung der Rohstoffe

Die Hohlglasrezeptur ist zusammengesetzt aus verschiedenen Rohstoffen, in der Fig. 4B sind drei Stoffe 39 angedeutet, die gemeinsam das Gemenge bilden. Die wesentlichen Bestandteile sind: Glasschmelzsand, eisenarmer Kalk, Kaliumcarbonat, Natriumnitrat, Soda schwer, Bariumcarbonat. Die Schüttdichte der Hauptbestandteile liegt zwischen 1-1,4 g/ml, die Dichte bis 2,7 g/l, die Korngrößen liegen zwischen 0,01 und 1,6 mm.

Folgende zwei grundsätzliche Verfahren zur Mischung des Gemenges können angewendet werden:
- Trockene Mischung:
   Mischung der pulverförmigen Rohstoffe (Quarzsand, sonstige Bestandteile) im trockenen Zustand.
- Dispergierung der Pulverteilchen in einer Flüssigkeit:
   Bei der Lagerung der pulverförmigen Rohstoffe bilden sich Agglomerate, die bei der Dispergierung weitestgehend aufgelöst werden, um einen homogenen Grünkörper zu erhalten. Dadurch ist die erreichbare Homogenität höher als bei der trockenen Mischung. Als Dispergierflüssigkeit ist reines Wasser sehr geeignet.

### 2. Schritt: Formgebung

An das Mischen schließt sich ein Verfahrensschritt an, in dem die Mischung komprimiert und auf die gewünschte Konfiguration des Halbzeuges 2, den Grünkörper, gebracht wird.

Die Gründichte der Körper nach dem Formen liegt dabei, je nach dem angewendeten Formgebungsverfahren zwischen 10 und 45 % der Dichte des später gesinterten Körpers, d.h. die Grünkörper schrumpfen beim Sintern beträchtlich.

An die Formgebung sind folgende Anforderungen zu stellen:
- Gute Homogenität des Formkörpers.
   Sonst Gefahr unerwünschter Störstellen im gesinterten Glas.
- Gleichmäßige, möglichst enge Porenstruktur.
   Dadurch gleichmäßige Schrumpfung beim Sintern, konforme Abbildung der gewünschten Geometrie, geringere Sintertemperaturen bei engeren Poren.
- Geometrie entsprechend den Anforderungen.
   Zur Vermeidung einer aufwendigen Nachbearbeitung.
- Geringe Kontamination durch Störstoffe,
   Unerwünschte Verunreinigungen, z.B. Alkali- und Erdalkaliverunreinigungen, bilden Störstellen im Produkt und können nur bei hohen Temperaturen beseitigt werden.
   Für die Formgebung eignen sich nachstehende Verfahren:
   A. Uniaxiales Pressen von Pulvern
      Darunter versteht man die Verdichtung des Pulvers mittels eines Preßstempels 40 von einer Seite aus.
   B. Isostatisches Pressen von Pulvern
      Darunter versteht man die Verdichtung von rieselfähigem Pulver mit ausreichend hoher Schüttdichte von mehreren Seiten, ggf. mit zusätzlicher thermischer Behandlung. Die notwendige Schüttdichte wird bei bestimmten Pulvern (z.B. Kieselsäuren) durch Voragglomeration erreicht.
   C. Strangpressen
      Dieses Verfahren sieht ein kontinuierliches Strangpressen einer glatten, plastischen Masse, zumeist Dispersion, vor.
   D. Zentrifugieren
      Dieses Verfahren beinhaltet das Abzentrifugieren der Teilchen aus einer dünnflüssigen Suspension.
   E. Kolloidale Filterung (Schlickerguß)
      Darunter versteht man die Phasentrennung der dispergierten Teilchen von der Dispergierflüssigkeit (Schlicker) durch Herauspressen der Flüssigkeit aus einer Form durch einen Filter, der die Teilchen zurückhält.
   F. Formgebung durch Vernetzung
      Dieses Verfahren bezieht sich auf eine Ausflockung (Koagulation) kolloidaler Teilchen einer dafür geeigneten Suspension. Die Eignung wird oft erst durch bestimmte Zusätze, meist Fluoride, erreicht. Die Suspension ist dann nur im stark gescherten Zustand dünnflüssig, während sie sich im Ruhezustand verfestigt (Thixotropie).
   G. Elektrophoretische Abscheidung
      Das Verfahren wird hier der Vollständigkeit halber genannt, da eine industrielle Anwendung derzeit nicht bekannt ist. Die Teilchen in einer homogenen Suspension bewegen sich beim Anlegen eines elektrischen Feldes gleichförmig auf ein Filter zu und bilden dort den Grünling.
   H. Sol-Gel Verfahren
      Mit dem Sol-Gel Verfahren können Gläser hergestellt werden, ohne daß ein Schmelz- oder Läuterungsprozeß notwendig ist. Der Aufbau des Glasnetzwerkes erfolgt durch Abscheidung von gelöstem SiO₂ in einem Gel. Nach der Entwässerung kann das Gel zu einem kompakten Glas weit unterhalb der Schmelztemperatur gesintert werden.

### 3. Schritt: Trocknung

Die Formgebung bestimmter Ausgangsstoffe im zweiten Schritt, z.B. kolloidaler Dispersionen oder Sol-Gele, erfordert eine anschließende Trocknung, bevor die eigentliche Sinterung durchgeführt wird.

Die Trocknung der feuchten Grünkörper gehört wie in der Keramik wegen der Gefahr der Rißbildung zu den kritischen Prozeßschritten. Deshalb wurden in der Vergangenheit vielfach Versuche durchgeführt, die Glasteilchen durch Vorpressen direkt ohne Dispergierflüssigkeit zu formen. Da aber die gleichmäßige Dispergierung der Teilchen (homogenes Gefüge) ohne Flüssigkeit sehr schwer zu erreichen ist, werden bei den meisten bekannten Anwendungen der Formgebung flüssig geformte Grünkörper hergestellt. Aus diesem Grund wurden verschiedene Trocknungsverfahren entwickelt, die an die Teilchengröße, die Gründichte und die sich daraus ergebenden Porendurchmesser angepaßt sind.

Bei der konventionellen Trocknung erfolgt diese in einem temperierten Luftstrom. Um dabei die Gefahr der Rißbildung beim Trockenvorgang zu minimieren, ist eine Variante die Trocknung in elastischen Formen, z.B. in einer elastischen, wasserdampfdurchlässigen Form (Folie), die beim Trocknen gemeinsam mit dem Formling schrumpft und erst nach dem Trocknen entfernt wird.

Daneben kennt man die Trocknung durch Lösungsmittelaustausch. Nach der Formgebung im zweiten Schritt wird die Dispergierflüssigkeit Wasser durch Diffusion gegen eine Flüssigkeit mit einer geringeren Oberflächenspannung ausgetauscht, die dann im weiteren Trockenverlauf aus den Porenräumen entweicht.

Schließlich kann die sogenannte überkritische Trocknung angewendet werden, ein aufwendiges Verfahren zur Trocknung ohne Risse und ohne Schrumpfung des Grünlings. Dabei erfolgt eine vollständige Aufhebung des störenden Einflusses der Oberflächenspannung beim Trocknen durch Überschreitung des überkritischen Punktes der Dispersionsflüssigkeit in einem Autoklaven.

### 4. Schritt: Reinigung

Bei der Herstellung hochreiner Kieselgläser schließt sich nach der Trocknung und vor dem Sintern ein Reinigungsprozeß an, bei dem Verunreinigungen fast vollständig über die Porenräume entfernt werden können. Dies ist der wesentliche Vorteil beim Sinterprozeß für diese Gläser.

Die Reinigung, die üblicherweise in einer chlorhaltigen Atmosphäre durchgeführt wird, erstreckt sich nicht nur auf Verunreinigungen an Kornoberflächen, sondern auch auf Verunreinigungen im Korn, die wegen der geringen Diffusionswege in kurzer Zeit an die Oberfläche diffundieren können. Dort reagieren sie mit der chlorhaltigen Atmosphäre und gelangen über das offene Porensystem an die Oberfläche des Formkörpers.

### 5. Schritt: Sinterung

Bei der Sinterung wird der noch offenporige Grünkörper zu einem transparenten Glas verdichtet, das im Idealfall keine Poren mehr aufweist. Dabei wird die Temperatur so erhöht, daß die Poren über einen viskosen Fluß geschlossen werden.

Üblicherweise erfolgt das Sintern in einem konventionellen Ofen, in dem mehrere durch elektrischen Strom beheizte Heizelemente (z.B. Graphit, MoSi₂, ZrO₂) Wärme erzeugen, die auf den Formling über ein Arbeitsrohr durch Wärmeleitung, Konvektion und Strhalung übertragen wird. Der Formling befindet sich im Arbeitsrohr. Die meisten Öfen werden mit Luft als Ofenatmosphäre betrieben, manche Öfen (Graphit) werden auch mit N₂/H₂-Inertgas-Atmosphäre betrieben.

Daneben ist auch die Strahlungssinterung bekannt, ein Verfahren, das mit einem kalten Arbeitsrohr arbeitet, in dem der Formling mit einem thermischen Strahler oder einem Laser erwärmt wird.

Schließlich kennt man auch die HF- und Plasmasinterung. Diese induktive Erhitzung mittels hochfrequenter elektromagnetischer Felder ist bei der Erwärmung hinreichend elektrisch leitender Werkstücke gebräuchlich.

Weitere Möglichkeiten können die Erwärmung mittels Mikrowellenplasma oder mittels Plasmabrenner sein.

### 6. Schritt: Kontrolle

In diesem Schritt erfolgt eine umfassende Kontrolle des gesinterten Halbzeuges 2 auf Gewicht, Volumen, Zusammensetzung und Zustand.

Die Vorteile eines Halbzeuges 2 gemäß Figur 4 sind:
- einfacher Fertigungsprozeß der formoptimierten, profilierten Tablette
- blasoptimierter Prozeß möglich.

Zu berücksichtigen sind dabei allerdings die Zerstörungs- und Beschädigungsgefahr des Halbzeuges beim Transport sowie seine schwierige Handhabung und Lagerung infolge der Profilierung des Halbzeuges.

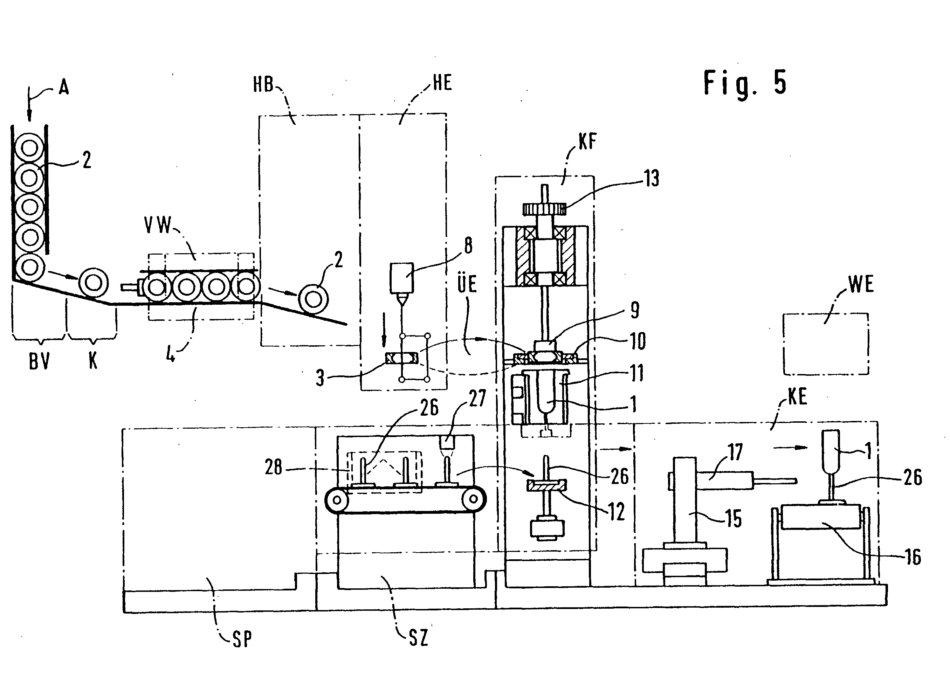

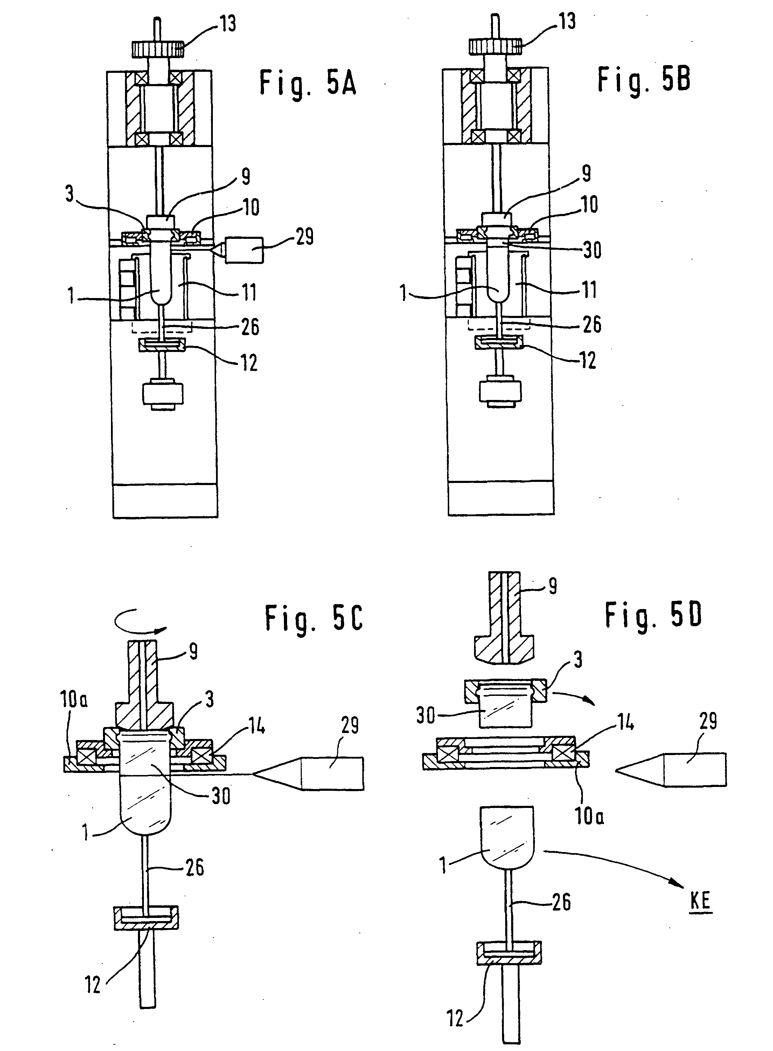

Die Figur 5 mit den Ausschnittvergrößerungen nach Figur 5A und 5B sowie den Zusatzdarstellungen nach den Figuren 5C bis 5D zeigen eine weitere vorteilhafte Ausführungsform der erfindungsgemäßen Vorrichtung, die nach dem erfindungsgemäßen Verfahren zur Herstellung von Hohlglas-Formkörpern 1 arbeitet. Die Vorrichtung nach Figur 5 entspricht prinzipiell derjenigen nach Figur 1, sie ist jedoch auf die Fertigung von Hohlglas-Formkörpern 1 in Form von Kelchen abgestellt. Sämtliche mit der Figur 1 übereinstimmende Vorrichtungsteile sind mit den gleichen Bezugszeichen versehen und brauchen daher an dieser Stelle nicht mehr weiter erläutert zu werden. Die zentralen Unterschiede liegen im wesentlichen in der Form 11 der Blasformeinheit für die Kelche, die in Figur 5 als KF (Kelchformungs-Einheit) bezeichnet wird sowie in dem an die Kelche angepaßten Bodenheber 12, dem ebenfalls an die Kelche angepaßten Greifer 17 sowie durch ein neues Funktionsmodul, der Stielzuführung SZ, von dem aus die an den Kelchen anzubringenden Stiele 26 an den Bodenteller 12 übergeben werden. Die Stiele 26 mit ihren Bodenplatten können wahlweise als Halbzeug bereitgestellt oder unmittelbar vor der Kelchformung in einer weiteren Funktionseinheit, der Stielpresse SP, hergestellt werden. Auf dieser Stielpresse werden aus entsprechenden Halbzeugen Stiele mit Bodenplatten gepreßt. Zuvor durchlaufen die zugehörigen Halbzeuge, wie bei der Formgebung des Kelches, nacheinander folgende Stationen:
- Halbzeug-Bereitstellung und Vereinzelung,
- Halbzeug-Kontrolle,
- Halbzeug-Vorwärmung,
- Halbzeug-Plastifizierung,
- Stielpressung.
   Der vollautomatische Preßtakt der Stielpresse SP ist dabei auf den Takt der Formgebung angepaßt. Die Halbzeuge werden dabei aus einem Lager entnommen und der Halbzeug-Bereitstellung zugeführt. Nach der Einzelkontrolle werden sie in einem Durchlaufofen vorgewärmt, anschließend auf einer weiteren Station unmittelbar vor dem Pressen plastifiziert. In einer zweigeteilten Stielpreßform werden sie von oben mit einem Druckstempel zu Stielen gepreßt, bevor die Preßform öffnet und der Stiel samt Bodenplatte mit einem geeigneten Übersetzer an die Funktionseinheit SZ übergeben wird. In dem Funktionsmodul SZ befindet sich ein Durchlauf-Vorwärmofen 28, dem die Stiele 26, entweder als Halbzeug aus einer nicht dargestellten Bevorratung oder von der Stielpresse SP her durch ein Zuführsystem, z.B. einem Greifer, zugeführt werden. Dort werden sie mit ihrer Bodenplatte, beispielsweise auf einem dargestellten Band stehend, durch den Ofen geführt und gezielt erwärmt. Kurz vor der Übergabe an den Bodenheber 12 durch einen geeigneten, ebenfalls nicht dargestellten Übersetzer mit Greifer, wird die Stielspitze, bevorzugt durch einen Strahler 27, nochmals gezielt erwärmt. Danach werden die Stiele, auf ihrer Bodenplatte stehend, an den Bodenheber 12 übergeben. Dort wird der Stiel 26 zentriert und gespannt. Der Bodenheber führt den heißen Stiel von unten an den Kelch 1 heran. Der für die Stielverbindung notwendige Druck wird über den Bodenheber 12 aufgebracht. Bei Bedarf kann die Verbindungsstelle während der Verbindung mit einem nicht dargestellten Strahler weiter erwärmt werden, während Kelch 1 und Stiel 26 gemeinsam drehen.
   Nach der erfolgten Verbindung wird das Stielglas 1 vom Bodenheber nach unten abgesenkt und von dem Entnahmegreifer 17 in den Funktionsmodul KE, die Kelchentnahme, übernommen.
   Die Figur 5B zeigt in einer vergrößerten Darstellung ausschnittsweise den Funktionsmodul KF, die Kelchformung mit der Anbringung des Stieles an den Kelch 1. Bei der dargestellten Position
- ist die Form 11 offen,
   fährt der Bodenheber 12 mit dem Stiel 26 in die obere Stellung,
- wird der Stiel 26 zentriert,
- wobei sich Kelch und Stiel drehen.

Es ist nicht, wie in Figur 5 dargestellt, zwingend, die Stielverbindung mit dem Kelch in den Fertigungsprozeß einzubeziehen. Die Fertigungstiefe kann auch so gestaltet sein, daß in der Fertigungseinheit ein Kelch ohne Stiel hergestellt wird, quasi als Halbzeug, der erst in einem späteren Produktionsprozeß mit einem Stiel versehen wird. Die Herstellung der Verbindung zwischen Stiel 26 und Kelch 1 unmittelbar nach der Kelchformung in der Funktionseinheit KF hat den Vorteil, daß der Fertigungsprozeß gestrafft wird und die nach dem Blasen vorhandene Kelchwärme, Wärme, die bei der Verbindung ohnehin benötigt wird, ausgenutzt werden kann.

Der Kelch 1 mit dem Stiel 26 kann, je nach vorgesehener Fertigungstiefe, entweder mit dem sogenannten Überglas oder mit abgetrenntem Überglas in die Kelchentnahme KE überführt werden. In Figur 5A ist dabei ein Abtrennen des Überglases 30 vom restlichen Kelch 1 mit dem Strahl eines Lasers 29 dargestellt, wobei in den schematischen Darstellungen, gemäß den Figuren 5C und D, die dabei ablaufenden Vorgänge nochmals verdeutlicht werden. Der Laserstrahl des Lasers 29 wird durch eine (nicht dargetellt) Optik an den Kelch 1 herangeführt, wenn nach dem Formvorgang die Glasform 11 geöffnet ist und der Bodenheber 12 sich in der oberen Position befindet und das Glas 1 samt Stiel 26 von unten festhält. Der Blaskopf 9, der Kelch 1 und der Bodenheber 12 drehen sich dabei, wobei sich der Blaskopf 9 in der unteren Stellung befindet, entsprechend der Darstellung in Figur 1K. Durch die Trennung mit dem Laserstrahl in Verbindung mit der Mundrandverschmelzung an dieser Stelle, kann die weitere Bearbeitung des Mundrandes entfallen. Es wird dabei keine zusätzliche Spannung in den Kelch eingebracht, so daß die verbleibenden geringen Spannungen fast vollständig in einem nachfolgenden Kühlband abgebaut werden können, wodurch eine geringere Bruchgefahr gegeben ist. Nach erfolgter Trennung - dieser Zustand ist in der Figur 5D dargestellt - wird der Trennlaser 29 abgeschaltet, der Blaskopf 9 nach oben gefahren und der Bodenheber 12 nach unten abgesenkt. Der Kelch 1 kann dann mittels des Greifers 17 in den Funktionsmodul KE, die Entnahme, übernommen werden. Das Überglas 30, das sich noch in dem ringförmigen Halbzeugträger 3 befindet, kann dann von dem Halbzeug-Zuführsystem entnommen werden, bevor dieses das nächste Halbzeug zuführt.

Die dargestellte Lasertrennung kann optional auch bereits vor dem Zuammenführen von Kelch und Stiel erfolgen. Entnommen wird dann ein Kelch ohne Überglas und Stiel.

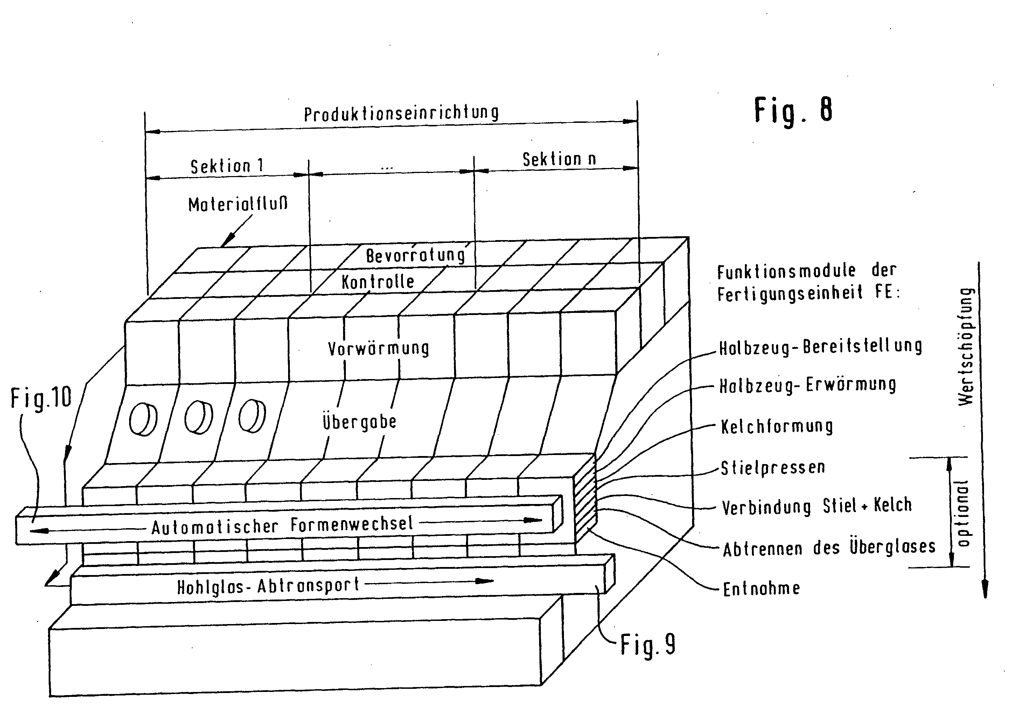

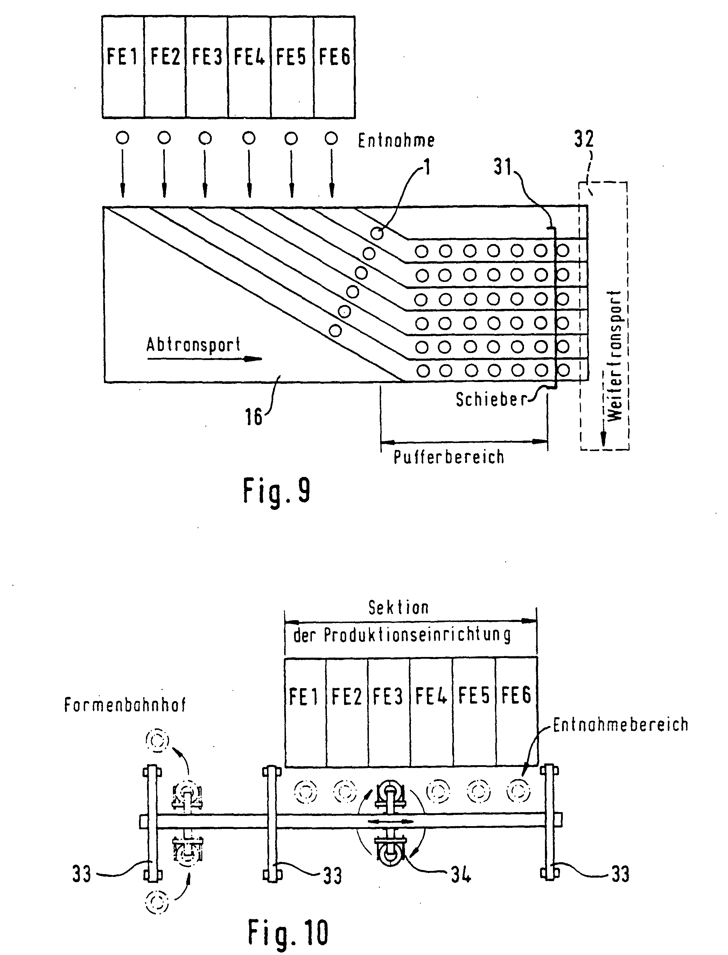

Der Funktionsmodul BE übernimmt die fertigen Hohlgläser 1 und übergibt sie an den Folgeprozeß. Die Hohlgläser 1 werden dabei nach dem Formprozeß in der Kelchformung KF durch die Entnahmevorrichtung 17 auf dem Band 16, der Abtransportvorrichtung, abgesetzt, wie bereits im Zusammenhang mit der Figur 1 erläutert wurde. In der Abtransporteinrichtung 16 werden die Kelche gepuffert und definiert weitergeleitet (einzeln oder in bestimmter Stückzahl), wie später noch anhand der Fig. 9 erläutert wird.

Bei der Entnahme der Hohlgläser, hier in Form der Kelche, haben diese je nach gewählten Optionen (mit/ohne Stielverbindung, mit/ohne Überglastrennung) verschiedene Fertigunestiefen erreicht. Daraus ergeben sich verschiedene Varianten bei der Entnahme und dem Abtransport der Kelche. Beispielweise kann der Kelch nach erfolgter Abtrennung des Überglases, auf seiner Bodenplatte stehend, auf dem Transportband 16 aufgenommen werden. Es ist auch denkbar, das noch nicht von dem ringförmigen Halbzeugträger 3 abgetennte Hohlglas auf das Band 16 zu übernehmen, mit dem Halbzeugträger nach unten, das heißt, auf dem Kopf stehendem Kelch. Die Trennung von Halbzeugträger 3 und dem Kelch erfolgt dann in Folgeprozessen. Hinsichtlich der Entnahme ergeben sich weitere Varianten, je nach dem wie Stiel und Kelch optional zusammengeführt sind.

Bislang wurde die Formung von Kelchen und Bechern beschrieben. Es versteht sich, daß in entsprechender Weise auch andere Hohlgläser, wie Biergläser, Flaschen oder dergleichen, mit dem erfindungsgemäßen Verfahren bzw. der zugehörigen Vorrichtung geformt werden können.

Die in den Figuren 1 und 5 dargestellte Fertigungseinheit ist vorzugsweise variabel zusammengesetzt aus mehreren Funktionseinheiten FE, auch Funktionsmodule genannt, auf denen nacheinander die einzelnen Fertigungsschritte stattfinden, das heißt, die Fertigungseinheit ist vorzugsweise modular aufgebaut. Die Aufgabenerfüllung
- Halbzeug-Bereitstellung,
- Halbzeug-Erwärmung,
- Hohlglasformung durch Blasen,
- Zusammenführen und Verbinden von als Halbzeug zur Verfügung gestellten Stielen mit einem Kelch (Option) oder
- Integration eines Stielfertigungsmoduls (Option) sowie
- Abtransport des fertigen Hohlglases
soll daher mit Hilfe einzelner Funktionsmodule möglich sein.

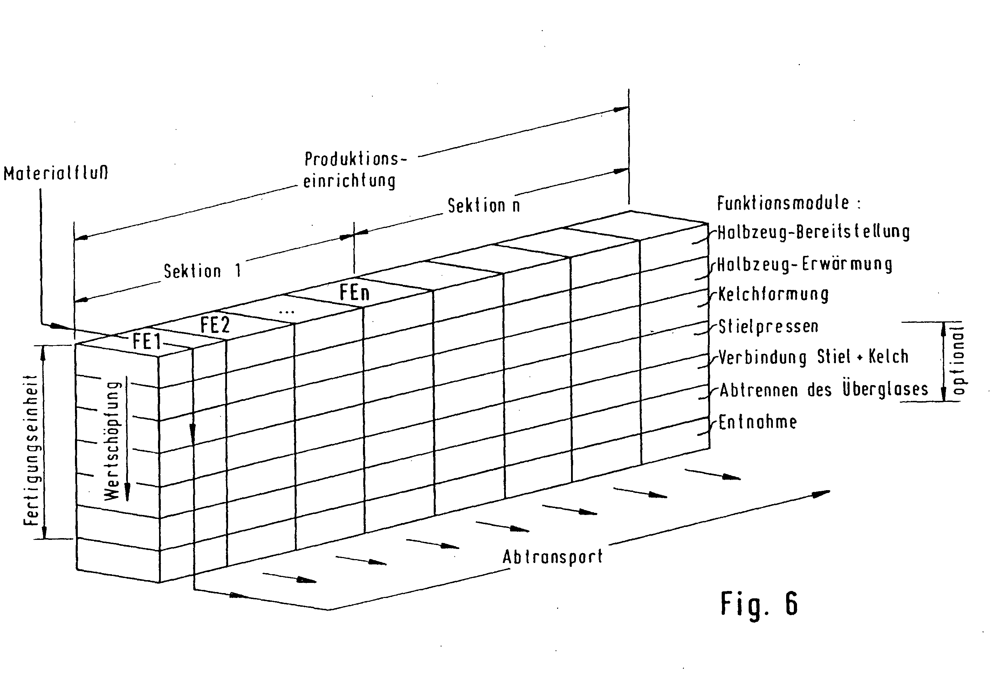

Die gesamte Produktionseinrichtung ist vorzugsweise dergestalt aufgebaut, daß mehrere modular kombinierbare Fertigungseinheiten (FE1, FE2..... FEn) eine Sektion und mehrere Sektionen eine Produktionseinrichtung bilden. Eine derartige Produktionseinrichtung ist in der Figur 6 dargestellt, wobei jede Fertigungseinheit mit einzelnen Funktionsmodulen, ggfs. optional, bestückt ist.

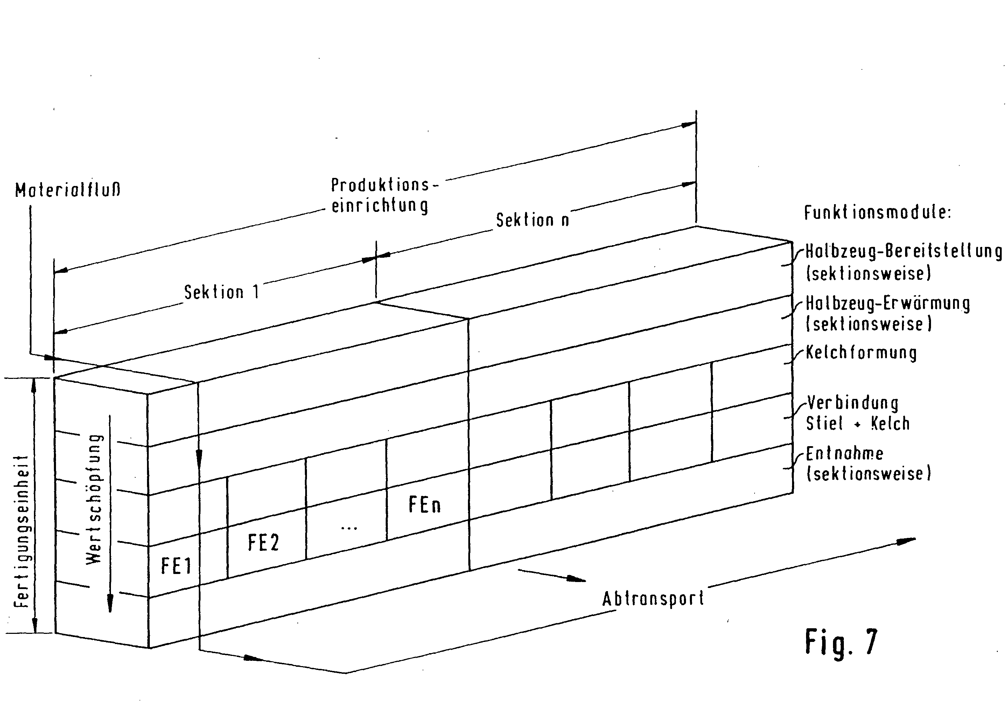

Die Figur 7 zeigt dabei eine Variante, bei der mehrere Fertigungseinheiten gemeinsame Funktionsmodule besitzen können, wie durch die entsprechende Blockbildung angedeutet ist.

Hinter den Fertigungseinrichtungen sind nacheinander folgende Stationen angeordnet:
- Halbzeug-Bevorratung BV,
- Halbzeug-Kontrolle K,
- Halbzeug-Vorwärmung VW.

Quer vor den Fertigungseinheiten und längs zur Produktionseinrichtung befinden sich:
- Der gemeinsame Abtransport der Hohlgläser, vorzugsweise über das Förderband 16, und
- eine automatische Formwechseleinrichtung.

Dabei ist auch denkbar, diese quer vor den Fertigungseinheiten angeordneten Stationen sektionsweise zuzuordnen.

Eine derartig vervollständigte Produktionseinrichtung ist in der Figur 8 dargestellt.

Die Figur 9 zeigt den Abtransport der erzeugten Hohlgläser 1 über das Transportband 16, das sich quer vor den nebeneinander angeordneten Fertigungseinrichtungen FE befindet. Spezielle Abweiser verhindern, daß bereits auf dem Band befindliche Gläser mit neu hinzukommenden Gläsern kollidieren.

Im hinteren Bereich des Bandes 16 werden die Gläser 1 gepuffert, damit sie durch einen Schieber 31, der getaktet arbeitet, z.B. an ein Anschlußband 32 übergeben werden können.

In Figur 10 ist das Prinzip des automatischen Formenwechsels für die einzelnen Funktionseinheiten dargestellt.

Die Blasformen 11 in den einzelnen Funktionseinheiten werden vor ihrem Einsatz gepastet, damit die gepastete Schicht das Wasser aufnehmen kann, welches beim Blasprozeß das trennende Dampfpolster bildet. Durch den Formprozeß verschleißt die Pastenschicht und die Formen müssen während der laufenden Produktion nach und nach ausgewechselt werden.

Die in Figur 10 dargestellte Einheit zum automatischen Formenwechsel, in den Figuren 1 und 5 die Funktionseinheit WE, ermöglicht den zügigen Formenwechsel an einer Fertigungseinheit ohne zusätzlichen Personalaufwand, während auf den benachbarten Einheiten weiter produziert werden kann. Durch eine optische Kelchüberwachung unmittelbar nach der Formung kann der Formenwechsel initiiert werden, falls dort fehlerhafte Kelche auftreten. Die automatische Wechseleinrichtung befindet sich quer vor den nebeneinander angeordneten Fertigungseinrichtungen über dem Abtransport, wie aus der Figur 8 hervorgeht.

Für den Formenwechsel muß die jeweilige Fertigungseinheit FE im Bereich der Blasform 11 von der Entnahmeseite zugängig sein. Der Formenmantel, in dem die beiden inneren Formenhälften eingehängt sind, ist weit geöffnet. Auf dem Portal 33 der Wechseleinheit befindet sich z.B. ein drehbarer, längsbeweglicher zweiseitiger Greifarm 34. Von einer Seite des Armes aus werden die verbrauchten Formhälften entnommen, der Arm wird um 180° gedreht, danach werden von der zweiten Seite aus zwei neue Formenhälften eingesetzt.

Die unbrauchbaren Formen werden dabei an einem an einer Seite des Portals angeordneten Formenbahnhof automatisch gegen neue Formen gewechselt, die für den nächsten Wechsel dort bereitstehen.

Die Vorteile, die durch die modulare Produktionseinrichtung erzielt werden, sind:
- Klarer Materialfluß innerhalb einer Fertigungseinheit von oben nach unten.
- Geringe spezifische Formenkosten,
- Möglichkeit der weiteren Verbesserung bestimmter Produkteigenschaften, z.B. Verminderung der Wandstärke, bessere geometrische Gestalt (Kappen- und Bodenglasplanität, Stielzentrizität, o.ä.).
- Vereinfachung der nachfolgenden Prozesse durch hohe erreichbare Fertigungstiefen (Wertschöpfung) auf der Produktionseinrichtung.
- Einfachere Fertigung farbiger Gläser und/oder Stiele.
- Gleichzeitige parallele Fertigung mehrere kleiner Losgrößen bzw. Fertigung einer ganzen Glasserie auf einer Einrichtung.
- Versuchsbetrieb auf einer Fertigungseinheit (Nullserien neuer Artikel, Test technischer Verbesserungen, o.ä.) parallel zur Produktion unter Produktionsbedingungen.
- Verbesserte Ausnutzung der räumlichen Situation am Produktionsstandort und Verminderung des Platzbedarfes durch variable Zusammenstellung (Anzahl, Aufbau etc.) mehrerer Produktionseinrichtungen.
- Betreiben der Produktionseinrichtung unabhängig vom technologie- und investitionsintensiven Wannenbetrieb.
- Fertigung kleiner Losgrößen mit geringem Formeneinsatz.
- Geringere Verluste bei Maschinenumrüstung durch schnelleren Umbau parallel zur Produktion.
- Geringere Ausfallzeiten (kein Stillstand der Gesamtanlage) bei Maschinenschäden durch zügigen Austausch des defekten Moduls oder der kompletten Fertigungseinheit gegen funktionstüchtige Baugruppen.
- Verminderung der Betriebskosten (Personal, Material, Energie, Formen) durch einen gestrafften Produktionsprozeß.

Im Vorstehenden wurde das erfindungsgemäße Verfahren und die zugehörige Vorrichtung beschrieben, bei der durch die Verwendung von auf das zu fertigende Produkt abgestimmten Halbzeugen eine Unabhängigkeit von dem Schmelzwannenbetrieb erzielt wird. Der modulare Aufbau der Produktionseinrichtung erfüllt dabei die Forderung nach einer hohen Flexibilität in der Fertigung, so daß auch in Verbindung mit einem Wannenbetrieb durch das erfindungsgemäße Konzept bedeutende technische, unternehmerische und wirtschaftliche Vorteile entstehen.

## Patentansprüche

1. Verfahren zur Herstellung von Kelchgläsern, Bechern und gleichartigen Hohlgläsern (1) durch Blasformen eines geschmolzenen massiven Glaspostens, mit den Schritten:
- Herstellen von massiven Glasrohlingen in Form von konfektionierten Halbzeugen (2) in einer eigenen separaten Fertigungslinie,
- Lagern und Bevorraten der Halbzeuge (2),
- Zufuhr der Halbzeuge aus der Bevorratung an die Fertigungslinie für das Ausformen der Hohlgläser unter Vorwärmen der Halbzeuge,
- Bereitstellen der vorgewärmten Halbzeuge (2) für eine weitere Erwärmung,
- Erhitzen des Halbzeuges (2) auf Blastemperatur zu einem platisch verformbaren massiven Glasposten durch eine weitere Erwärmung,
- Formblasen des plastifizierten Glaspostens zu dem Hohglas in einer Blasform (10,11) mit Unterstützung des geblasenen Hohlglases durch einen Bodenheber (12),
- Entnahme des Hohlglases (1) aus der Blasform (10,11) und Übergabe an den Folgeprozeß.

2. Verfahren nach Anspruch 1, gekennzeichnet durch eine indirekte Halbzeug-Herstellung durch Ausstechen oder Schneiden von runden flachen Glasscheiben (2) aus einem Flachglas (24) als Halbzeug für das Formblasen.

3. Verfahren nach Anspruch 1, gekennzeichnet durch eine direkte Halbzeug-Herstellung durch Gießen einer Tablette (2) in einer Form (22) im Anschluß an das Aufschmelzen eines Glasrohstoffes als Halbzeug für das Formblasen.

4. Verfahren nach Anspruch 3, gekennzeichnet durch das Gießen einer flachen Tablette (2).

5. Verfahren nach Anspruch 3, gekennzeichnet durch das Gießen einer in bezug auf das herzustellende Hohlglas formoptimierten profilierten Tablette (2).

6. Verfahren nach Anspruch 1, gekennzeichnet durch eine direkte Herstellung eines in bezug auf das herzustellende Hohlglas formoptimierten Halbzeuges (2) durch Ausgießen eines Halbzeugträgers (3) mit einer optimierten Innenform mit Glasrohstoff aus einer Schmelze, wobei das Halbzeug (2) in den folgenden Schritten bis zum Abtrennen des geblasenen Hohlglases in dem Halbzeugträger (3) verbleibt.

7. Verfahren nach Anspruch 1, gekennzeichnet durch eine Herstellung des Halbzeuges (2) mit einer vorgegebenen Konfiguration durch einen Sinterprozeß.

8. Verfahren nach Anspruch 7, dadurch gekennzeichnet, daß das Halbzeug (2) in einem Halbzeugträger (3) mit einer die Konfiguration vorgebenden Innenform gesintert wird, wobei das Halbzeug in den folgenden Schritten bis zum Abtrennen des geblasenen Hohlglasformlings in dem Halbzeugträger verbleibt.

9. Verfahren nach Anspruch 7 oder 8, gekennzeichnet durch einen Sinterprozeß mit den Verfahrensschritten:
- Mischen der Rohstoffe (39)
- Formgeben eines Grünkörpers
- Trocknen des Grünkörpers, optional je nach dem Formgebungsverfahren
- Reinigen des Grünkörpers
- Sintern des Grünkörpers zu dem Halbzeug (2) für die Herstellung des Hohlglases
- Kontrolle des gesinterten Halbzeuges (2).

10. Verfahren nach einem der Ansprüche 1 bis 9 zur Herstellung von Kelchen (1) mit einem Stiel (26), gekennzeichnet durch das Zusammenführen und Verbinden von extern als Halbzeug gefertigten Stielen (26) mit dem formgeblasenen Kelch (1) in der Blasform.

11. Verfahren nach einem der Ansprüche 1 bis 9 zur Herstellung von Kelchen (1) mit einem Stiel (26), gekennzeichnet durch das Zusammenführen und Verbinden von innerhalb der Fertigungslinie gefertigten Stielen (26) mit den formgeblasenen Kelchen (1) in der Blasstation (KF).

12. Verfahren nach einem der Ansprüche 1 bis 11, dadurch gekennzeichnet, daß das weitere Erhitzen des vorwiegend auf ca. 500°C vorgewärmten Halbzeuges (2) auf Blastemperatur von ca. 1050°C in zwei Stufen erfolgt, durch eine erste weitere Erwärmung auf ca. 900°C kurz vor der Blasstation (BF,KF) mit anschließender Übergabe des noch nicht plastischen Halbzeuges (2) an diese Station und durch eine zweite weitere Erwärmung des Halbzeuges auf Blastemperatur von ca. 1050°C in dieser Station (BF,KF).

13. Verfahren nach einem der Ansprüche 1 bis 11, dadurch gekennzeichnet, daß das weitere Erhitzen des vorzugsweise auf ca. 500°C vorgewärmten Halbzeuges (2) auf Blastemperatur von ca. 1050°C in einem einzigen Schritt in einer gesonderten Vorrichtung (8) erfolgt mit Übergabe des plastifizierten Halbzeuges (2) an die Blasstation (BF,KF).

14. Verfahren nach Anspruch 12 oder 13, dadurch gekennzeichnet, daß das weitere Erhitzen des Halbzeuges (2) mittels Mikrowellenstrahlung erfolgt.

15. Verfahren nach einem der Ansprüche 1 bis 14, gekennzeichnet durch ein Abtrennen des Überglases (30) vom restlichen gewünschten Hohlglas (1) in der Blasstation (BF,KF) nach Öffnung der Form mittels eines Laserstrahles.

16. Vorrichtung zur Herstellung von Kelchgläsern, Bechern und gleichartigen Hohlgläsern (1) mit einer Blasformstufe (BF, KF), bestehend aus einem Blaskopf (9) mit einem Blas-Arbeitsring, einer Blaseinheit (10), einer Form (11) und einem Bodenteller (12), in der ein geschmolzener Glasposten zu dem gewünschten Hohlglas formbar ist, und mit einer Entnahmestufe (BE, KE) enthaltend Einrichtungen (15, 17) zur Entnahme des Hohlglases (1) aus der Blasformstufe, sowie zur Übergabe an den Folgeprozeß, gekennzeichnet durch:
- eine Stufe (BV) mit Lagerungs- und Transporteinrichtungen zum Bevorraten und Zuführen von zwischengelagerten massiven Glas-Halbzeugen (2) für das zu formende Hohlglas (1), die zuvor in einer eigenen separaten Vorrichtung hergestellt sind,
- eine nachgeschaltete Vorwärmstufe (VW) mit Wärmeeinrichtungen (4, 4a) zum Vorwärmen der massiven Halbzeuge (2),
- eine Stufe (HB) mit Transporteinrichtungen (5, 5a, 6, 7) zum Bereitstellen der massiven Halbzeuge (2) an eine Halbzeug-Erwärmstufe (HE) mit Wärmeeinrichtungen (8) zum weiteren Erwärmen der Halbzeuge (2) zumindest auf eine Temperatur nahe der Blastemperatur, und
- durch eine Übergabestufe (ÜE) mit Einrichtungen zum Ablegen der in der Halbzeug-Erwärmstufe (HE) weiter erwärmten massiven Halbzeuge (2) in die Blasformstufe (BF, KF), wo sie als plastisch verformbare massive Glasposten für die Blasformung der Hohlgläser zur Verfügung stehen.

17. Vorrichtung nach Anspruch 16, dadurch gekennzeichnet, daß das Halbzeug (2) eine flache Tablette ist).

18. Vorrichtung nach Anspruch 16, dadurch gekennzeichnet, daß das Halbzeug (2) eine formoptimierte Tablette ist.

19. Vorrichtung nach Anspruch 16, dadurch gekennzeichnet, daß das Halbzeug (2) als formoptimierter Glaskörper in einem Halbzeugträger (3), mit diesem eine Verarbeitungseinheit bildend, aufgenommen ist.

20. Vorrichtung nach Anspruch 19, dadurch gekennzeichnet, daß der Halbzeugträger ringförmig ist und daß in der Blaseinheit (11) der Blasformstufe (BF, KF) eine Aufnahme für den Halbzeugträger als Arbeitsring beim Formblasen vorgesehen ist.

21. Vorrichtung nach Anspruch 19, dadurch gekennzeichnet, daß die Außenkontur des Halbzeugträgers (3) in Form, Dicke und Durchmeser standardisiert ist und das Profil der Innenkontur an das zu formende Hohlglas (1) angepaßt ist.

22. Vorrichtung nach einem der Ansprüche 19 bis 21, gekennzeichnet durch eine Trenneinrichtung (29) zum Abtrennen des geformten Hohlglases (1) von dem Halbzeugträger (3).

23. Vorrichtung nach einem der Ansprüche 16 bis 22, dadurch gekennzeichnet, daß zwischen der Bevorratungsstufe (BV) und der Vorwärmstufe (VW) eine Halbzeug-Kontrollstufe (KV) mit Einrichtungen zur Zustandskontrolle der Halbzeuge (2) eingeschaltet ist.

24. Vorrichtung nach einem der Ansprüche 16 bis 23, dadurch gekennzeichnet, daß die Wärmeeinrichtungen (4, 4a) in der Vorwärmstufe (VW) durch einen Durchlauf-Wärmeofen (4) mit Strahlungsbrennern (4a) gebildet sind.

25. Vorrichtung nach einem der Ansprüche 16 bis 24, dadurch gekennzeichnet, daß die Transporteinrichtungen in der Stufe (HB) zum Bereitstellen der Halbzeuge (2) durch Schieber (5, 5a) in Verbindung mit einer Rutsche (6) oder durch einen Greifarm (7) gebildet sind.

26. Vorrichtung nach einem der Ansprüche 16 bis 25, dadurch gekennzeichnet, daß die Wärmeeinrichtungen in der Halbzeug-Erwärmstufe (HE) alternativ durch einen Wärmestrahler (8), einen Gas- oder Gas/Sauerstoffstrahler oder einen Mikrowellenstrahler (35-38) gebildet sind, die in einer weitgehend geschlossenen Kammer, vorzugsweise unterhalb der Halbwerkzeuge (2), angeordnet sind.

27. Vorrichtung nach Anspruch 26, dadurch gekennzeichnet, daß die Wärmeeinrichtungen so ausgelegt sind, daß die Halbzeuge (2) auf eine Temperatur in der Nähe der Blastemperatur, vorzugsweise auf 900°C, erwärmt werden, mit Aufheizung auf die Blastemperatur in dem Blaskopf (9) der nachgeschalteten Blasformstufe (KF, BF) durch Einsatz eines Lasers mit Strahlzufuhr durch eine Bohrung im Blaskopf (9) für die Zufuhr der Druckluft.

28. Vorrichtung nach Anspruch 26, dadurch gekennzeichnet, daß die Wärmeeinrichtungen so ausgelegt sind, daß die weitere Erwärmung auf Blastemperatur in einem einzigen Schritt in einer gesonderten Vorrichtung parallel zum Blasprozeß erfolgt.

29. Vorrichtung nach einem der Ansprüche 16 bis 28, dadurch gekennzeichnet, daß die Einrichtungen in der Übergabestufe (ÜE) durch einen Schwenkarm mit Greifer gebildet sind.

30. Vorrichtung nach einem der Ansprüche 16 bis 29, dadurch gekennzeichnet, daß die Stufen der Halbzeugbereitstellung (HB), der Halbzeugerwärmung (HE), der Blasformung (BF, KF) und der Entnahme (BE; KE) als eigenständige Funktionsmodule ausgebildet sind und das Grundgerüst einer modular aufgebauten Fertigungseinheit (FE) bilden, dem weitere Module, wie Stielzuführung, Stielpressen, Abtrennen von Überglas, optional hinzufügbar sind.

31. Vorrichtung nach Anspruch 30, dadurch gekennzeichnet, daß mehrere Fertigungseinheiten (FE) modular zu einer Sektion kombiniert sind und mehrere Sektionen zu einer Produktionseinrichtung zusammengeschaltet sind.

32. Vorrichtung nach Anspruch 31, dadurch gekennzeichnet, daß jede Fertigungseinheit (FE) mit einzelnen Funktionsmodulen bestückt ist.

33. Vorrichtung nach Anspruch 31, dadurch gekennzeichnet, daß mehrere Fertigungseinheiten (FE) gemeinsame Funktionsmodule aufweisen.

34. Vorrichtung nach einem der Ansprüche 31 bis 33, dadurch gekennzeichnet, daß hinter den Fertigungseinheiten (FE) die Stufen der Halbzeug-Bevorratung (BV), der Halbzeug-Kontrolle (K) und der Halbzeug-Vorwärmung (VW) angeordnet sind.

35. Vorrichtung nach einem der Ansprüche 31 bis 34, dadurch gekennzeichnet, daß quer vor den Fertigungseinheiten (FE) und längs zur Produktionseinrichtung eine Abtransporteinrichtung (16) für den gemeinsamen Abtransport der hergestellten Hohlglas-Formkörper (1) und eine automatische Formenwechseleinrichtung (33, 34) vorgesehen ist.

## Claims

1. Method for producing stemware, tumblers and similar hollow glassware (1) by blow moulding a molten solid gob of glass, comprising the following steps:
- production of solid glass blanks in the form of fabricated semifinished products (2) in their own separate manufacturing line,
- storage and stocking of the semifinished products (2),
- feeding the semifinished products from the stock to the manufacturing line for shaping the hollow glassware accompanied by preheating of the semifinished products,
- providing the preheated semifinished products (2) for further heating,
- heating the semifinished product (2) to blowing temperature to form a plastically deformable solid glass gob by further heating,
- mould blowing of the plasticized glass gob to form the hollow glass in a blow mould (10, 11) with support of the blown hollow glass by a bottom lifter (12),
- removal of the hollow glass from the blow mould (10, 11) and transfer to the process which follows.

2. Method according to Claim 1, characterized by an indirect semifinished product production by punching or cutting round flat glass discs (2) from flat glass (24) as semifinished product for mould blowing.

3. Method according to Claim 1, characterized by direct semifinished product production by casting a tablet (2) in a mould (22) following the melting of a glass raw material as semifinished product for mould blowing.

4. Method according to Claim 3, characterized by the casting of a flat tablet (2).

5. Method according to Claim 3, characterized by the casting of a profiled tablet (2) whose shape is optimized with respect to the hollow glass which is to be produced.

6. Method according to Claim 1, characterized by direct production of a semifinished product (2), whose shape is optimized with respect to the hollow glass to be produced, by filling a semifinished product carrier (3) having an optimized internal shape with glass raw material from a melt, the semifinished product (2) remaining in the semifinished product carrier (3) in the subsequent steps until the blown hollow glass is severed.

7. Method according to Claim 1, characterized by production of the semifinished product (2) with a predetermined configuration by a sintering process.

8. Method according to Claim 7, characterized in that the semifinished product (2) is sintered in a semifinished product carrier (3) with an internal shape which determines the configuration, the semifinished product remaining in the semifinished product carrier in the subsequent steps until the blow-moulded hollow glass article is severed.

9. Method according to Claim 7 or 8, characterized by a sintering process comprising the following method steps:
- mixing of the raw materials (39)
- shaping of a green body
- drying of the green body, optionally depending on the shaping process
- cleaning of the green body
- sintering of the green body to form the semifinished product (2) for the production of the hollow glass
- inspection of the sintered semifinished product (2).

10. Method according to one of Claims 1 to 9 for the production of goblets (1) with a stem (26), characterized by stems (26), which are manufactured externally as semifinished products, then brought together with and connected to the mould-blown goblet (1) in the blow mould.

11. Method according to one of Claims 1 to 9 for the production of goblets (1) with a stem (26), characterized by stems (26), which are manufactured within the manufacturing line, being brought together with and connected to the mould-blown goblets (1) in the blowing station (KF).

12. Method according to one of Claims 1 to 11, characterized in that the further heating of the semifinished product (2), which has predominantly been preheated to approximately 500°C, to the blowing temperature of approximately 1050°C takes place in two steps by means of a first further heating to approximately 900°C shortly before the blowing station (BF, KF), with subsequent transfer of the semifinished product (2), which is not yet plastic, to this station, and by means of a second further heating of the semifinished product to the blowing temperature of approximately 1050°C in this station (BF, KF).

13. Method according to one of Claims 1 to 11, characterized in that the further heating of the semifinished products (2), which has preferably been preheated to approximately 500°C, to a blowing temperature of approximately 1050°C is carried out in a single step in a separate device (8) with transfer of the plasticized semifinished product (2) to the blowing station (BF, KF).

14. Method according to Claim 12 or 13, characterized in that the further heating of the semifinished product (2) is carried out by means of microwave radiation.

15. Method according to one of Claims 1 to 14, characterized by a severing of the top glass (30) from the remaining, desired hollow glass (1) in the blowing station (BF, KF) by means of a laser beam after the mould has been opened.

16. Apparatus for producing stemware, tumblers and similar hollow glassware (1), having a blow-moulding stage (BF, KF), comprising a blow head (9) with a blow work ring, a blowing unit (10), a mould (11) and a bottom plate (12), in which a molten gob of glass can be shaped to form the desired hollow glass, and having devices (15, 17), which contain a removal stage (BE, KE), for removal of the hollow glass (1) from the blow-moulding stage and for transfer to the subsequent process, characterized by:
- a stage (BV) with storage and transport devices for stocking and feeding temporarily stored solid semifinished glass products (2) for the hollow glass (1) which is to be shaped, which semifinished products have been produced beforehand in their own separate apparatus,
- a subsequent preheating stage (VW) with heating devices (4, 4a) for preheating the solid semifinished product (2);
- a stage (HB) with transport devices (5, 5a, 6, 7) for providing the solid semifinished products (2) to a semifinished product heating stage (HE) with heating devices (8) for further heating of the semifinished products (2) at least to a temperature close to the blowing temperature, and
- by a transfer stage (ÜE) with devices for placing the solid semifinished products (2), which have been heated further in the semifinished product heating stage (HE), into the blow-moulding stage (BF, KF), where they are made available as plastically deformable solid gobs of glass for the blow-moulding of the hollow glassware.

17. Apparatus according to Claim 16, characterized in that the semifinished product (2) is a flat tablet.

18. Apparatus according to Claim 16, characterized in that the semifinished product (2) is a shape-optimized tablet.

19. Apparatus according to Claim 16, characterized in that the semifinished product (2) is accommodated, as a shape-optimized glass body, in a semifinished product carrier (3), forming a processing unit with the latter.

20. Apparatus according to Claim 19, characterized in that the semifinished product carrier is annular, and in that a receptacle for the semifinished product carrier is provided in the blowing unit (11) of the blow-moulding stage (BF, KF) as a work ring during mould blowing.

21. Apparatus according to Claim 19, characterized in that the outer contour of the semifinished product carrier (3) is standardized with respect to form, thickness and diameter and the profile of the inner contour is adapted to the hollow glass (1) to be shaped.

22. Apparatus according to one of Claims 19 to 21, characterized by a severing device (29) for severing the shaped hollow glass (1) from the semifinished product carrier (3).

23. Apparatus according to one of Claims 16 to 22, characterized in that a semifinished product inspection stage (KV) with devices for inspecting the state of the semifinished products (2) is connected between the preparation stage (BV) and the preheating stage (VW).

24. Apparatus according to one of Claims 16 to 23, characterized in that the heating devices (4, 4a) in the preheating stage (VW) are formed by a continuous heating furnace (4) with radiation burners (4a).

25. Apparatus according to one of Claims 16 to 24, characterized in that the transport devices in the stage (HB) for providing the semifinished products (2) are formed by pushers (5, 5a) in combination with a chute (6) or by a gripper arm (7).

26. Apparatus according to one of Claims 16 to 25, characterized in that the heating devices in the semifinished product heating stage (HE) are formed alternatively by a heat radiator (8), a gas radiator or gas/oxygen radiator or by a microwave radiator (35-38), which are arranged in a substantially closed chamber, preferably below the semifinished products (2).

27. Apparatus according to Claim 26, characterized in that the heating devices are designed in such a way that the semifinished products (2) are heated to a temperature in the vicinity of the blowing temperature, preferably to 900°C, with heating to the blowing temperature in the blow head (9) of the following blow-moulding stage (KF, BF) through the use of a laser with beam feed through a borehole in the blow head (9) for feeding the compressed air.

28. Apparatus according to Claim 26, characterized in that the heating devices are designed in such a way that the further heating to blowing temperature is carried out in a single step in a separate device in parallel with the blowing process.

29. Apparatus according to one of Claims 16 to 28, characterized in that the devices in the transfer stage (ÜE) are formed by a swivel arm with gripper.

30. Apparatus according to one of Claims 16 to 29, characterized in that the stages comprising semifinished product preparation (HB), semifinished product heating (HE), blow moulding (BF, KF) and removal (BE; KE) are designed as independent function modules and form the basic framework of a modular manufacturing unit (FE), to which further modules, such as stem feed, stem pressing, severing of top glass, may optionally be added.

31. Apparatus according to Claim 30, characterized in that a plurality of manufacturing units (FE) are combined in a modular manner to form a section and a plurality of sections are connected together to form a production device.

32. Apparatus according to Claim 31, characterized in that every manufacturing unit (FE) is fitted with individual function modules.

33. Apparatus according to Claim 31, characterized in that a plurality of manufacturing units (FE) have common function modules.

34. Apparatus according to one of Claims 31 to 33, characterized in that the stages comprising semifinished product stocking (BV), semifinished product inspection (K) and semifinished product preheating (VW) are arranged behind the manufacturing units (FE).

35. Apparatus according to one of Claims 31 to 34, characterized in that a discharge-conveyor device (16) for the common discharge conveying of the produced hollow glass shaped bodies (1) and an automatic mould-change device (33, 34) are provided transversely in front of the manufacturing units (FE) and longitudinally with respect to the production device.

## Revendications

1. Procédé pour la fabrication de verres cupuliformes, de béchers et de verres creux (1) similaires par moulage-soufflage d'une paraison de verre massive fondue, comportant les étapes consistant à :
- fabriquer des ébauches massives en verre sous forme de produits semi-finis (2) confectionnés, dans une propre ligne de fabrication séparée,
- entreposer et conserver les produits semi-finis (2),
- amener les produits finis provenant de la réserve dans la ligne de fabrication pour le façonnage des verres creux, avec préchauffage des produits semi-finis,
- préparer les produits semi-finis (2) préchauffés en vue d'un chauffage supplémentaire,
- chauffer le produit semi-fini (2) à la température de soufflage en une paraison de verre massif plastiquement déformable par un autre chauffage,
- mouler-souffler la paraison de verre plastifié en le verre creux dans un moule de soufflage (10, 11), le verre creux soufflé étant soutenu par un dispositif (12) de relèvement du fond,
- enlever le verre creux (1) du moule de soufflage (10, 11) et le transférer à la suite du processus.

2. Procédé selon la revendication 1, caractérisé par une fabrication indirecte des produits semi-finis par estampage ou découpe de plaques de verre (2) planes rondes dans un verre plat (24) en tant que produit semi-fini pour le moulage-soufflage.

3. Procédé selon la revendication 1, caractérisé par une fabrication directe des produits semi-finis par coulée d'une galette (2) dans un moule (22) après la fusion d'une matière première de verre en tant que produit semi-fini pour le moulage-soufflage.

4. Procédé selon la revendication 3, caractérisé par la coulée d'une galette (2) plane.

5. Procédé selon la revendication 3, caractérisé par la coulée d'une galette (2) profilée dont la forme est optimisée en fonction du verre creux à fabriquer.

6. Procédé selon la revendication 1, caractérisé par une fabrication directe d'un produit semi-fini (2) dont la forme est optimisée en fonction du verre creux à fabriquer, par coulée d'un support de produit semi-fini (3) dont la forme intérieure a été optimisée avec de la matière première de verre provenant d'un bain de fusion, le produit semi-fini (2) restant dans le support (3) de produit semi-fini au cours des étapes suivantes, jusqu'à la découpe du verre creux soufflé.

7. Procédé selon la revendication 1, caractérisé par une fabrication directe du produit semi-fini (2) dans une configuration prédéterminée, par un processus de frittage.

8. Procédé selon la revendication 7, caractérisé en ce que le produit semi-fini (2) est fritté dans un support (3) de produit semi-fini qui présente une forme intérieure qui définit la configuration, le produit semi-fini restant dans le support de produit semi-fini au cours des étapes suivantes, jusqu'à la séparation de l'ébauche de verre creux soufflée.

9. Procédé selon la revendication 7 ou 8, caractérisé par un processus de frittage qui présente les étapes de procédé suivantes :
- mélange des matières premières (39),
- façonnage d'un corps cru,
- séchage du corps cru, facultativement après le procédé de façonnage,
- nettoyage du corps cru,
- frittage du corps cru pour fournir le produit semi-fini (2) en vue de la fabrication du verre creux,
- contrôle du produit semi-fini (2) fritté.

10. Procédé selon l'une des revendications 1 à 9, pour la fabrication de coupelles (1) dotées d'un pied (26), caractérisé par l'assemblage et la liaison de pieds (26) préparés extérieurement en tant que produit semi-fini avec la coupelle (1) moulée-soufflée dans le moule de soufflage.

11. Procédé selon l'une des revendications 1 à 9, pour la fabrication de coupelles (1) dotées d'un pied (26), caractérisé par l'assemblage et la liaison de pieds (26) fabriqués à l'intérieur de la ligne de fabrication avec les coupelles (1) moulées-soufflées dans le poste de soufflage (KF).

12. Procédé selon l'une des revendications 1 à 11, caractérisé en ce que la poursuite du chauffage du produit semi-fini (2) préchauffé principalement à environ 500°C jusqu'à la température de soufflage d'environ 1050°C s'effectue en deux étapes, par un premier réchauffement supplémentaire à environ 900°C peu avant le poste de soufflage (BF, KF) avec ensuite transfert du produit semi-fini (2) non encore plastifié dans ce poste, et par un deuxième réchauffement supplémentaire du produit semi-fini à la température de soufflage d'environ 1050°C dans ce poste (BF, KF).

13. Procédé selon l'une des revendications 1 à 11, caractérisé en ce que la poursuite du chauffage du produit semi-fini (2) préchauffé de préférence à environ 500°C jusqu'à la température de soufflage d'environ 1050°C s'effectue en une seule étape dans un dispositif (8) séparé, avec transfert du produit semi-fini (2) plastifié au poste de soufflage (BF, KF).

14. Procédé selon la revendication 12 ou 13, caractérisé en ce que la poursuite du chauffage du produit semi-fini (2) s'effectue par irradiation par micro-ondes.

15. Procédé selon l'une des revendications 1 à 14, caractérisé par une séparation du verre en excès (30) du reste du verre creux (1) souhaité dans le poste de soufflage (BF, KF), après ouverture du moule, au moyen d'un rayon laser.

16. Procédé pour la fabrication de verres cupuliformes, de béchers et de verres creux (1) similaires, comportant un étage de moulage-soufflage (BF, KF) constitué d'une tête de soufflage (9) présentant un anneau de travail de soufflage, d'une unité de soufflage (10), d'un moule (11) et d'un plateau de fond (12) dans lequel une paraison de verre fondu peut être façonnée en le verre creux souhaité, et avec un étage d'enlèvement (BE, KE) contenant des dispositifs (15, 17) pour l'enlèvement du verre creux (1) hors de l'étage de moulage-soufflage, ainsi que pour leur transfert à la suite du processus, caractérisé par :
- un étage (BV) présentant des dispositifs d'entreposage et de transport pour la conservation et l'amenée de produits semi-finis (2) en verre massif conservés temporairement pour le verre creux (1) à former, qui ont été fabriqués préalablement dans un propre dispositif séparé,
- un étage aval de préchauffage (VW) doté de dispositifs thermiques (4, 4a) pour le préchauffage des produits semi-finis massifs (2),
- un étage (HB) doté de dispositifs de transport (5, Sa, 6, 7) pour la mise à disposition des produits semi-finis massifs (2) dans un étage de réchauffage (HE) des produits semi-finis doté de dispositifs thermiques (8) pour la poursuite du chauffage des produits semi-finis (2) au moins à une température proche de la température de soufflage, et
- par un étage de transfert (ÜE) doté de dispositifs pour déposer les produits semi-finis massifs (2) chauffés davantage dans l'étage de réchauffage (HE) des produits semi-finis dans l'étage de moulage-soufflage (BF, KF) où ils sont disponibles en tant que paraisons de verre massif plastiquement déformables pour le moulage-soufflage des verres creux.

17. Dispositif selon la revendication 16, caractérisé en ce que le produit semi-fini (2) est une galette plane.

18. Dispositif selon la revendication 16, caractérisé en ce que le produit semi-fini (2) est une galette dont la forme a été optimisée.

19. Dispositif selon la revendication 16, caractérisé en ce que le produit semi-fini (2) est reçu en tant que corps de verre de forme optimisée dans un support (3) de produit semi-fini avec lequel il forme une unité de traitement.

20. Dispositif selon la revendication 19, caractérisé en ce que le support de produit semi-fini est de forme annulaire et en ce que dans l'unité de soufflage (11) de l'étage de moulage-soufflage (BF, KF) est prévu un logement pour le support de produit semi-fini en tant qu'anneau de travail lors du moulage-soufflage.

21. Dispositif selon la revendication 19, caractérisé en ce que le contour extérieur du support (3) de produit semi-fini a une forme, une épaisseur et un diamètre standardisés, et le profil du contour intérieur est adapté au verre creux (1) à mouler.

22. Dispositif selon l'une des revendications 19 à 21, caractérisé par un dispositif de séparation (29) pour la séparation du verre creux moulé (1) du support (3) de produit semi-fini.

23. Dispositif selon l'une des revendications 16 à 22, caractérisé en ce qu'entre l'étage de conservation (BV) et l'étage de préchauffage (VW) est intercalé un étage de contrôle (KV) des produits semi-finis, doté de dispositifs pour le contrôle de l'état des produits semi-finis (2).

24. Dispositif selon l'une des revendications 16 à 23, caractérisé en ce que les dispositifs thermiques (4, 4a) de l'étage de préchauffage (VW) sont formés par un four thermique continu (4) doté de brûleurs à rayonnement (4a).

25. Dispositif selon l'une des revendications 16 à 24, caractérisé en ce que les dispositifs de transport de l'étage (HB) pour la mise à disposition des produits semi-finis (2) sont formés par des coulisseaux (5, 5a) reliés par une glissière (6) ou par un bras de saisie (7).

26. Dispositif selon l'une des revendications 16 à 25, caractérisé en ce que les dispositifs thermiques de l'étage de réchauffage (HE) des produits semi-finis sont en variante formés par un radiateur thermique (8), un radiateur à gaz ou à gaz/oxygène ou un émetteur de micro-ondes (35, 38) qui sont disposés dans une chambre largement fermée, de préférence en dessous des produits semi-finis (2).

27. Dispositif selon la revendication 26, caractérisé en ce que les dispositifs thermiques sont conçus de telle sorte que les produits semi-finis (2) sont réchauffés à une température située à proximité de la température de soufflage, de préférence à 900°C, avec chauffage à la température de soufflage dans la tête de soufflage (9) de l'étage de moulage-soufflage (KF, BF) situé en aval, par recours à un laser avec amenée du rayonnement par un alésage ménagé dans la tête de soufflage (9) pour l'amenée d'air comprimé.

28. Dispositif selon la revendication 26, caractérisé en ce que les dispositifs thermiques sont conçus de telle sorte que la poursuite du chauffage jusqu'à la température de soufflage s'effectue en une seule étape dans un dispositif séparé, en parallèle au processus de soufflage.

29. Dispositif selon l'une des revendications 16 à 28, caractérisé en ce que les dispositifs de l'étage de transfert (ÜE) sont formés par un bras pivotant doté d'un dispositif de saisie.

30. Dispositif selon l'une des revendications 16 à 29, caractérisé en ce que les étages de mise à disposition des produits semi-finis (HB), du réchauffage des produits semi-finis (HE), du moulage-soufflage (BF, KF) et de l'enlèvement (BE; KE) sont configurés comme modules fonctionnels autonomes et forment le bâti de base d'une unité de fabrication (FE) de structure modulaire à laquelle d'autres modules, par exemple une amenée de pieds, le pressage de pieds, la séparation de verre en excès, peuvent être ajoutés facultativement.

31. Dispositif selon la revendication 30, caractérisé en ce que plusieurs unités de fabrication (FE) sont combinées de manière modulaire en une section, et plusieurs sections sont rassemblées pour former une installation de production.

32. Dispositif selon la revendication 31, caractérisé en ce que chaque unité de fabrication (FE) est équipée de modules fonctionnels individuels.

33. Dispositif selon la revendication 31, caractérisé en ce que plusieurs unités de fabrication (FE) présentent des modules fonctionnels communs.

34. Dispositif selon l'une des revendications 31 à 33, caractérisé en ce que les étages d'entreposage des produits semi-finis (BV), de contrôle de produits semi-finis (K) et de préchauffage des produits semi-finis (VW) sont disposés en arrière des unités de fabrication (FE).

35. Dispositif selon l'une des revendications 31 à 34, caractérisé en ce que transversalement en avant des unités de fabrication (FE) et le long de l'installation de production sont prévues une installation d'évacuation (16) pour l'évacuation commune des corps moulés (1) en verre creux fabriqués et une installation de remplacement automatique des moules (33, 34).
